(19) Europäisches Patentamt
European Patent Office
Office européen des brevets

(11) **EP 4 108 411 B1**

(12) **EUROPÄISCHE PATENTSCHRIFT**

(45) Veröffentlichungstag und Bekanntmachung des Hinweises auf die Patenterteilung:
**18.12.2024   Patentblatt 2024/51**

(21) Anmeldenummer: **22179113.0**

(22) Anmeldetag: **15.06.2022**

(51) Internationale Patentklassifikation (IPC):
**B29C 45/76** (2006.01)   **G05B 19/418** (2006.01)

(52) Gemeinsame Patentklassifikation (CPC):
**B29C 45/766; B29C 45/7686; G05B 19/41875;**
B29C 2945/76936; G05B 2219/32194;
G05B 2219/45244

(54) **VERFAHREN, SYSTEM UND COMPUTERPROGRAMMPRODUKT ZUM ÜBERWACHEN EINES FORMGEBUNGSPROZESSES**

METHOD, SYSTEM AND COMPUTER PROGRAM PRODUCT FOR MONITORING A FORMING PROCESS

PROCÉDÉ, SYSTÈME ET PRODUIT DE PROGRAMME INFORMATIQUE PERMETTANT DE SURVEILLER UN PROCESSUS DE FORMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2021   AT 505052021**

(43) Veröffentlichungstag der Anmeldung:
**28.12.2022   Patentblatt 2022/52**

(73) Patentinhaber: ENGEL AUSTRIA GmbH
**4311 Schwertberg (AT)**

(72) Erfinder:
• BRAUN, Patrick
**9000 Gent (BE)**
• **KOPPAUER, Herwig**
**4040 Linz (AT)**

(74) Vertreter: **Torggler & Hofmann Patentanwälte - Innsbruck**
**Torggler & Hofmann Patentanwälte GmbH & Co KG**
**Wilhelm-Greil-Straße 16**
**6020 Innsbruck (AT)**

(56) Entgegenhaltungen:
DE-A1- 19 514 535   US-A1- 2006 224 540
US-A1- 2012 123 583   US-A1- 2021 008 774

**Beschreibung**

Die vorliegende Erfindung betrifft Verfahren zum Überwachen eines in Zyklen durchgeführten Formgebungsprozesses gemäß den Merkmalen des Oberbegriffs des Anspruchs 1 sowie ein Computerprogrammprodukt zum Überwachen eines in Zyklen durchgeführten Formgebungsprozesses gemäß den Merkmalen des Oberbegriffs des Anspruchs 19.

Bekannt sind Verfahren, wobei in einer Datensammlung zumindest die folgenden Daten bereitgestellt werden:

- für vergangene Zyklen jeweils Zyklusdaten des an einer Formgebungsmaschine durchgeführten Formgebungsprozesses und
- für zumindest einen Teil der vergangenen Zyklen Qualitätsdaten von mit der Formgebungsmaschine hergestellten Formteilen.

Beim weiteren Betrieb einer Formgebungsmaschine zum Durchführen des Formgebungsprozesses wird zumindest ein weiterer Zyklus des Formgebungsprozesses durchgeführt, wobei wieder Zyklusdaten anfallen, die im vorliegenden Dokument als aktuelle Zyklusdaten bezeichnet werden.

Es ist bekannt, diese Daten zu verwenden, um eine Vorhersage über die Qualität der im aktuellen Zyklus hergestellten Formteile zu treffen. Prinzipiell lässt sich dadurch eine Überwachung des Formgebungsprozesses realisieren, die beispielsweise ansprechen soll, wenn die Produktion von Ausschuss droht oder bereits im Gange ist.

Für die Berechnung oder Bestimmung dieser Vorhersage sind verschiedenste Ansätze bekannt. Die DE 112011103778 T5 und deren US-Familienmitglied US 2012/0123583 A1 offenbaren die Verwendung eines multivariaten Modells für eine Regelung eines Spritzgießprozesses. Die DE 102017104884 A1 offenbart die Überwachung eines Prozesses auf Basis von Fehlerbildern. Die DE 102018102299 A1 offenbart ein optisches Prüfsystem zum Erfassen von Merkmalen von Spritzgießteilen.

Die US 2006/0224540 A1 offenbart ein System zum Überwachen einer Spritzgießmaschine mit mehreren neuronalen Netzwerken. Die US 2021/0008774 A1 offenbart eine Anomalie-Erkennung samt einer auf einem qualitativen Modell basierenden automatisierten Ursachenanalyse. Die DE 19514535 A1 offenbart, das Erheben von Prozessdaten, um in Verbindung mit einem Prognosemodell eine Überwachung durchzuführen.

Nachteilig an den im Stand der Technik bekannten Systemen ist, dass entweder großer Aufwand zum Bereitstellen von Prüfsystemen betrieben werden muss oder dass keine effektive Überwachung sichergestellt wird, weil die Vorhersagen der Qualität des Formteils nicht gut genug sind.

Insbesondere bei Spritzgießprozessen ist die Vorhersage der Qualität des Formteils alles andere als trivial, nicht nur weil Spritzgießprozesse an sich komplex und nichtlinear sind, sondern auch weil Spritzgießprozesse in der Realität vielen Änderungen unterliegen. Beispielsweise schon eine Änderung der Außentemperatur oder leichte Veränderungen in den Einstellungen der Formgebungsmaschine führen zu Änderungen, die sich in den an der Maschine gewonnenen Messwerten deutlich niederschlagen. Bemerkenswert ist, dass sich solche Änderungen aber oft nicht negativ auf das hergestellte Formteil auswirken. Vielmehr kann ein geänderter Prozess oft einfach weiterlaufen, weil weiter Gutteile produziert werden.

Die Herausforderung bei solchen Formgebungsprozessen ist also, zu erkennen, ob Änderungen im Prozess negative Auswirkungen auf die Qualität des Formteils haben, was sich in der Praxis schwierig gestaltet. Modelle mit Simulationen können oft nur schwierig mit den minutiösen Änderungen, die an der realen Maschine auftreten, abgeglichen werden. Die meisten statistischen Modelle benötigen für verlässliche Vorhersagen große Datenmengen, die besonders bei Produktionsbeginn in den allermeisten Fällen nicht vorliegen.

Die Erfindung hat es sich daher zur Aufgabe gemacht, ein Verfahren und ein Computerprogrammprodukt bereitzustellen, die eine verbesserte Überwachung eines Formgebungsprozesses erlauben.

Hinsichtlich des Verfahrens wird die Aufgabe durch die Merkmale des Anspruchs 1 gelöst, nämlich durch die folgenden Schritte:

- Bestimmen zumindest zweier nächster Nachbarn in Form der Zyklusdaten von zumindest zwei der vergangenen Zyklen, sodass die Zyklusdaten der zumindest zwei nächsten Nachbarn näher an den aktuellen Zyklusdaten als diejenigen Zyklusdaten liegen, die nicht zu den zumindest zwei nächsten Nachbarn gehören, wobei für die Bestimmung der zumindest zwei nächsten Nachbarn nur jene vergangenen Zyklen herangezogen werden, wofür Qualitätsdaten in der Datensammlung enthalten sind,
- Überprüfen eines Vorhersagbarkeitskriteriums, wobei überprüft wird, ob eine Qualitätsstreuung der Qualitätsdaten der Zyklen der zumindest zwei nächsten Nachbarn kleiner als eine Maximalstreuung und/oder größer als eine Minimalstreuung ist, und
- falls das Vorhersagbarkeitskriterium nicht erfüllt ist, Ausgeben einer ersten Meldung, dass eine Qualität und/oder ein Qualitätsdatum des mit dem zumindest einen weiteren Zyklus hergestellten Formteils nicht zuverlässig vorhersagbar ist.

Bevorzugt vorgesehen kann es sein, dass im Rahmen einer Anomalie-Prüfung überprüft wird, ob es sich bei den aktuellen Zyklusdaten um einen Ausreißer handelt, und, falls dies der Fall ist, für zumindest einen nachfolgenden Zyklus - vorzugsweise mehrere nachfolgende Zyklen - zumindest eines der folgenden durchgeführt wird:

- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder
- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Hinsichtlich des Computerprogrammprodukts wird die Aufgabe durch die Merkmale des Anspruchs 19 gelöst, nämlich indem das Computerprogrammprodukt Instruktionen zum Durchführen der folgenden Schritte beinhaltet:

- Bestimmen zumindest zweier nächster Nachbarn in Form der Zyklusdaten von zumindest zwei der vergangenen Zyklen, sodass die Zyklusdaten der zumindest zwei nächsten Nachbarn näher an den aktuellen Zyklusdaten als diejenigen Zyklusdaten liegen, die nicht zu den zumindest zwei nächsten Nachbarn gehören, wobei für die Bestimmung der zumindest zwei nächsten Nachbarn nur jene vergangenen Zyklen herangezogen werden, wofür Qualitätsdaten in der Datensammlung enthalten sind,
- Überprüfen eines Vorhersagbarkeitskriteriums, wobei überprüft wird, ob eine Qualitätsstreuung der Qualitätsdaten der Zyklen der zumindest zwei nächsten Nachbarn kleiner als eine Maximalstreuung und/oder größer als eine Minimalstreuung ist, und
- falls das Vorhersagbarkeitskriterium nicht erfüllt ist, Ausgeben einer ersten Meldung, dass eine Qualität und/oder ein Qualitätsdatum des mit dem zumindest einen weiteren Zyklus hergestellten Formteils nicht zuverlässig vorhersagbar ist.

Bevorzugt vorgesehen kann es sein, dass das Computerprogrammprodukt weitere Instruktionen zum Durchführen der folgenden Schritte beinhaltet:

- Durchführen einer Anomalie-Prüfung, wobei überprüft wird, ob es sich bei den aktuellen Zyklusdaten um einen Ausreißer handelt, und,
- falls dies der Fall ist, für zumindest einen nachfolgenden Zyklus - vorzugsweise mehrere nachfolgende Zyklen - Veranlassen zumindest eines der folgenden:
- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder

- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Ein Grundaspekt der Erfindung ist, dass die vorhandenen Daten nicht nur dazu verwendet werden, eine Vorhersage der Qualität des aktuell produzierten Formteils zu erstellen, sondern dass - vorzugsweise zuerst - überprüft wird, ob mit den vorhandenen Daten überhaupt eine angemessene Vorhersage möglich ist, also das Überprüfen eines Vorhersagbarkeitskriteriums.

In besonders bevorzugten Ausführungsbeispielen kann dann beispielsweise eine Überprüfung der Qualität des hergestellten Formteils angefordert werden, wenn das Vorhersagbarkeitskriterium nicht erfüllt ist.

Dieses Bereitstellen oder Anfordern der Qualitätsdaten kann auf verschiedene Art und Weise erfolgen, nämlich durch

- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder
- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Anders formuliert, sollen auf wie auch immer erdenkliche Weise die Qualitätsdaten erhoben werden oder es soll die Information verbreitet werden, dass die Qualitätsdaten zu erheben sind.

Gemäß der Erfindung ist es weder notwendig, aufwändige Systeme zum ständigen, direkten Überwachen der Qualität des aktuell hergestellten Formteils zu verwenden, noch muss komplett auf eine effektive Überwachung des Formgebungsprozesses verzichtet werden.

Ein weiterer Vorteil der Erfindung besteht darin, dass sie auf relativ einfache Art und Weise implementiert werden kann, indem die Vorhersagbarkeit einfach anhand von Daten von jenen früher durchgeführten Zyklen geprüft wird, die so nahe wie möglich am aktuellen Zyklus liegen, d. h. durch die Verwendung der Zyklusdaten der Zyklen der zumindest zwei nächsten Nachbarn.

Die Maximalstreuung und die Minimalstreuung können jeweils als Grenzwerte aufgefasst werden. Liegt die Qualitätsstreuung der Qualitätsdaten der Zyklen der zumindest zwei nächsten Nachbarn unterhalb der Minimalstreuung und/oder oberhalb der Maximalstreuung, kann nicht mit einer zuverlässigen Vorhersage der Qualität des im zumindest einen weiteren Zyklus hergestellten Formteils gerechnet werden. Ist die Streuung zu gering (Qualitätsstreuung unterhalb der Minimalstreuung), liegt dies an einer zu geringen Abhängigkeit der Qualität des Formteils von den erfassten Zyklusdaten. Ist die Streuung zu groß (Qualitätsstreuung oberhalb der Maximalstreuung), ist eine zuverlässige Vorhersage offensichtlich ebenfalls nicht möglich.

Dass eine Qualität oder ein Qualitätsdatum des mit dem zumindest einen weiteren Zyklus hergestellten Formteils nicht zuverlässig vorhersagbar ist, kann so verstanden werden, dass die Genauigkeit der Vorhersage mit den vorliegenden Daten und gegebenenfalls dem verwendeten Vorhersagemodell wahrscheinlich zu gering ist, um von Nutzen zu sein. Dass es prinzipiell (bspw. aufwändigere oder komplexere) Modelle oder Daten geben könnte, mit denen doch eine zuverlässige Vorhersage möglich ist, oder dass die Vorhersage für einen Zyklus genau ist, obwohl das Vorhersagbarkeitskriterium nicht erfüllt ist, ist dafür irrelevant.

Bevorzugt kann es vorgesehen sein, dass die Zyklusdaten und/oder die Qualitätsdaten jeweils eindeutig einem gewissen vergangenen Zyklus zugeordnet sind. Untersuchungen der Anmelderin haben aber ergeben, dass das erfindungsgemäße Verfahren auch dann mit hoher Genauigkeit die Vorhersagbarkeit überprüfen kann, wenn die Zyklusdaten und die Qualitätsdaten nur gewissen Gruppen von Zyklen zugeordnet sind (d. h. die Information, in welchem Zyklus genau ein gewisses Zyklusdatum oder ein gewisses Qualitätsdatum auftrat, ist verloren und wird durch eine ungefähre Zuordnung zu einer Gruppe von Zyklen ersetzt).

Bei den vergangenen Zyklen kann es sich um Zyklen handeln, die unmittelbar vor dem weiteren Zyklus durchgeführt wurden und/oder die einige Zeit vorher durchgeführt wurden (beispielsweise während eines früheren Produktionsloses).

Die Bestimmung der zumindest zwei nächsten Nachbarn basiert auf einer Metrik, die einen Abstand zwischen den Elementen der Zyklusdaten definiert. Als Elemente der Zyklusdaten werden dabei jene Daten verstanden, die einem Zyklus zugeordnet sind (wobei - wie oben ausgeführt - nicht bekannt sein muss, welcher vergangene Zyklus dies wirklich war).

Werden beispielsweise in jedem Zyklus drei Messwerte genommen, besteht jedes Element der Zyklusdaten aus drei Messwerten. Die Abstände der Elemente sind daher in diesem Beispiel im dreidimensionalen Raum zu bestimmen. In realen Formgebungsprozessen werden selbstredend weit mehr als nur drei Messwerte je Zyklus erhoben, weshalb der Raum der Zyklusdaten in der Regel sehr viel mehr als drei Dimensionen aufweist.

Die Abstände in diesem Raum können beispielsweise mit der bekannten p-Norm ermittelt werden. Bevorzugt können dabei die Euklidische Norm (p=2, "normale" Euklidische Geometrie) oder die Summennorm (p=1, Manhattan- oder Taxigeometrie) sein.

Die Qualitätsdaten können zumindest einen (kontinuierlichen oder diskreten, insbesondere binären) Qualitätsparameter beinhalten.

Der zumindest eine Qualitätsparameter kann als Kriterium für die Qualität der hergestellten Formteile dienen, insbesondere dafür, ob es sich um ein Gutteil oder ein Ausschussteil handelt.

Hierfür kann beispielsweise vorgesehen sein, dass Bediener einen zulässigen Toleranzbereich vorgeben, wobei das Formteil als Gutteil eingestuft wird, wenn der zumindest eine Qualitätsparameter innerhalb dieses Bereichs liegt, und als Ausschussteil eingestuft wird, wenn der zumindest eine Qualitätsparameter außerhalb dieses Bereichs liegt.

In besonders bevorzugten Ausführungsbeispielen wird das erfindungsgemäße Verfahren im laufenden Betrieb der Formgebungsmaschine in jedem neuen Zyklus durchgeführt.

Besonders bevorzugt kann das erfindungsgemäße Verfahren automatisiert implementiert und/oder computerimplementiert sein.

Die erste Meldung kann neben der Information, dass eine Qualität und/oder ein Qualitätsdatum des mit dem zumindest einen weiteren Zyklus hergestellten Formteils (im aktuellen Arbeitspunkt) nicht zuverlässig vorhersagbar ist, beispielsweise mögliche Gründe für die mangelnde Vorhersagbarkeit beinhalten. Mögliche Gründe für die mangelnde Vorhersagbarkeit könnten beispielsweise eine unzureichende Qualitätserfassung sein oder die Tatsache, dass nicht alle relevanten Prozessparameter als Zyklusdaten erfasst werden.

Die erste Meldung muss selbstverständlich nicht wörtlich lauten, dass eine Qualität und/oder ein Qualitätsdatum des mit dem zumindest einen weiteren Zyklus hergestellten Formteils nicht zuverlässig vorhersagbar ist. Gemeint ist, dass die Information vermittelt wird, dass entweder die Qualität des mit dem zumindest einen weiteren Zyklus produzierten Formteils als Ganzes ("die Qualität") oder ein oder mehrere bestimmte Aspekte der Qualität (beispielsweise Einhalten von Maßtoleranzen) nicht zuverlässig vorhersagbar ist/sind. Ein Aspekt der Qualität eines Formteils kann durch ein Qualitätsdatum, beispielsweise als Qualitätsparameter, quantifiziert werden.

Es kann vorgesehen sein, dass

- eine Auswertung all jener Arbeitspunkte (Zyklusdaten) des Formgebungsprozesses und/oder der Qualitätsdaten ausgegeben wird, wofür das Vorhersagbarkeitskriterium nicht erfüllt ist, und/oder
- wobei zeitliche Änderungen der Zusammenhänge zwischen den Zyklusdaten und den Qualitätsdaten ausgegeben werden.

Schutz begehrt wird außerdem für ein computerlesbares Speichermedium, auf dem ein erfindungsgemäßes Computerprogrammprodukt gespeichert ist.

Des Weiteren wird Schutz für eine Formgebungsmaschine begehrt, welche zum Durchführen eines in Zyklen durchzuführenden Formgebungsprozesses eingerichtet ist und zumindest einen Speicher und zumindest eine Prozessoreinheit beinhaltet, wobei im zumindest einen Speicher ein erfindungsgemäßes Computerprogrammprodukt gespeichert ist und die zumindest eine Prozessoreinheit zum Ausführen des erfindungsgemäßen Computerprogrammprodukts eingerichtet ist.

Unter Formgebungsmaschinen können Spritzgießmaschinen, Spritzpressen, Pressen oder dergleichen verstanden werden.

Die Datensammlung wird mitunter auch als Datenbasis bezeichnet.

Es ist zu bemerken, dass bei manchen Maschinenkonfigurationen in einem Zyklus mehrere Formteile hergestellt werden (bspw. in einem Spritzgießwerkzeug mit mehreren Formnestern). Ebenso kann im Rahmen der Erfindung mehr als ein weiterer Zyklus durchgeführt werden, die dann gemäß der Erfindung als Gruppe geprüft werden. Für die Zwecke des vorliegenden Dokuments wird der Einfachheit halber auf das Formteil im Singular Bezug genommen. Insbesondere in den beschriebenen Fällen ist dabei aber auch immer die Möglichkeit mehrerer Formteile, die im wenigstens einen weiteren Zyklus hergestellt werden, zu verstehen.

Weitere vorteilhafte Ausführungsformen der Erfindung sind in den abhängigen Ansprüchen definiert. Die in Verbindung mit dem erfindungsgemäßen Verfahren beschriebenen optionalen Maßnahmen können selbstverständlich auch in Verbindung mit dem erfindungsgemäßen Computerprogrammprodukt eingesetzt oder darin implementiert werden.

Es kann vorgesehen sein, dass die Qualitätsdaten der vergangenen Zyklen durch Messung an den Formteilen und/oder durch menschliche Begutachtung der Formteile erhoben werden.

Die Qualitätsstreuung kann als - vorzugsweise normierte - Differenz eines Qualitätsmaximalwerts der zumindest zwei nächsten Nachbarn und eines Qualitätsminimalwerts der zumindest zwei nächsten Nachbarn berechnet werden. Dabei ist unter dem Qualitätsmaximalwert ein maximaler Wert der Qualitätsdaten der Zyklen der zumindest zwei nächsten Nachbarn zu verstehen. Analog ist unter dem Qualitätsminimalwert ein minimaler Wert der Qualitätsdaten der Zyklen der zumindest zwei nächsten Nachbarn zu verstehen.

Die Qualitätsstreuung der Qualitätsdaten kann beim Überprüfen des Vorhersagbarkeitskriteriums in einer Form verwendet werden, wobei die Qualitätsstreuung zu einer Zyklusdatenstreuung der Zyklusdaten der zumindest zwei nächsten Nachbarn in Beziehung gesetzt ist. Beispielsweise kann die Qualitätsstreuung durch eine Zyklusdatenstreuung geteilt werden, bevor sie mit der Maximalstreuung oder der Minimalstreuung verglichen wird, um das Vorhersagbarkeitskriterium zu überprüfen.

Die Zyklusdatenstreuung kann als - vorzugsweise normierte - Maximaldistanz zwischen den zumindest zwei nächsten Nachbarn berechnet werden.

Zur Normierung können jeweils statistische Größen der Zyklusdaten und/oder der Qualitätsdaten herangezogen werden.

Im Rahmen einer Anomalie-Prüfung kann überprüft werden, ob es sich bei den aktuellen Zyklusdaten um einen Ausreißer handelt, und, falls dies der Fall ist, kann eine zweite Meldung ausgegeben werden, beispielsweise mit dem Hinweis, dass die aktuellen Zyklusdaten eine erhebliche Abweichung von den historischen Zyklusdaten aufweisen. Die zweite Meldung kann selbstverständlich auch im Rahmen der Variante der Erfindung ausgegeben werden.

Die Anomalie-Prüfung kann mittels winkelbasierter Ausreißer-Detektion (Englisch: angle-based outlier-detection, ABOD) durchgeführt werden.

Alternativ oder zusätzlich können im Rahmen der Anomalie-Prüfung Abstände der aktuellen Zyklusdaten von den Zyklusdaten (Abstände der Elemente, wie oben) bestimmt werden. Beispielsweise könnten die aktuellen Zyklusdaten als Ausreißer eingestuft werden, falls ein Minimum dieser Abstände größer als ein vorgegebener Grenzwert ist.

Dieser Grenzwert kann durch einen Bediener festgelegt werden und/oder als Sensitivitätsparameter und/oder die mittleren Abstände der Zyklusdaten festgelegt werden. Dabei können entweder alle Zyklusdaten herangezogen werden oder nur die Zyklusdaten während einer definierten Trainingsphase.

Als Sensitivitätsparameter wird im vorliegenden Dokument ein auf einer maximalen relativen Abweichung basierender Wert verstanden, der beispielsweise als absolute Abweichung bezogen auf eine mittlere Abweichung berechnet werden kann.

Alternativ oder zusätzlich kann es vorgesehen sein, dass Bediener eine Stichprobenrate vorgeben, beispielsweise eine Anzahl s der Stichproben, die pro Zahl Z der Zyklen zu nehmen sind, wobei Z beispielsweise fix 100 sein könnte, sodass Bediener nur die Anzahl s der Stichproben (pro 100 Zyklen) eingeben müssen.

Es könnte dann vorgesehen sein, dass diejenigen der Z Zyklen für das Nehmen einer Stichprobe (wobei die Qualität des Formteils durch einen Bediener und/oder eine Vorrichtung zum Erheben von Qualitätsdaten überprüft wird) ausgewählt werden, deren Zyklusdaten den größten Abstand von den übrigen Zyklusdaten aufweisen und/oder deren Qualitätsprognose am nächsten an einer Grenze des zulässigen Toleranzbereichs liegt.

Die zweite Mitteilung kann auch Informationen darüber beinhalten, welche Prozessparameter einen großen oder größten Beitrag dazu geleistet haben, dass die aktuellen Zyklusdaten als Ausreißer eingestuft werden. Insbesondere könnten diejenigen Prozessparameter identifiziert werden, die einen großen oder größten Beitrag zum Abstand der aktuellen Zyklusdaten von den Zyklusdaten leisten.

Die Anomalie-Prüfung kann bevorzugt vor der Prüfung des Vorhersagbarkeitskriteriums durchgeführt werden. Falls die Anomalie-Prüfung einen Ausreißer erkennt, muss das Vorhersagbarkeitskriterium dann nicht mehr zwingend geprüft werden. Prinzipiell könnte das Vorhersagbarkeitskriterium aber trotzdem geprüft werden.

Die Zyklusdaten und/oder die aktuellen Zyklusdaten können Einstelldaten der Formgebungsmaschine beinhalten, die den vergangenen Zyklen beziehungsweise dem zumindest einen weiteren Zyklus zugeordnet werden.

Wenn die Zyklusdaten und die aktuellen Zyklusdaten Einstelldaten der Formgebungsmaschine beinhalten, kann im Rahmen einer Einstellungs-Prüfung überprüft werden, ob ein Einstellungs-Abstand der zum zumindest einen weiteren Zyklus zugeordneten Einstelldaten von den Einstelldaten der Zyklusdaten geringer als ein vorherbestimmter Einstellungs-Maximalabstand ist, und, falls dies nicht der Fall ist, kann eine dritte Meldung ausgegeben werden. Es kann also erkannt werden, ob und/oder wann sich die Einstellung der Formgebungsmaschine signifikant geändert hat.

Dieser Einstellungs-Maximalabstand kann durch einen Bediener festgelegt werden und/oder als Sensitivitätsparameter und/oder die mittleren Abstände der Einstelldaten festgelegt werden. Dabei können entweder alle Einstelldaten herangezogen werden oder nur die Einstelldaten während einer definierten Trainingsphase.

Alternativ oder zusätzlich kann die Einstellungs-Prüfung auch für jeden Einstellparameter und/oder jede andere Einstellung separat erfolgen und es kann geprüft werden, ob eine Einstellung jeweils über ein gewisses Maß hinaus geändert wurde.

Die Einstellungs-Prüfung kann bevorzugt vor der Anomalie-Prüfung und der Prüfung des Vorhersagbarkeitskriteriums durchgeführt werden. Die Anomalie-Prüfung und/oder das erfindungsgemäße Prüfen des Vorhersagbarkeitskriteriums kann/können beispielsweise nur dann durchgeführt werden, wenn die Einstellungs-Prüfung keine (bspw. über den Einstellungs-Maximalabstand hinausgehenden) Änderungen der Einstellungen der Formgebungsmaschine erkannt hat.

Die Zyklusdaten und/oder die Qualitätsdaten können transformiert und dimensionsreduziert werden und die transformierten und dimensionsreduzierten Zyklusdaten und/oder die transformierten und dimensionsreduzierten Qualitätsdaten können für die Bestimmung der zumindest zwei nächsten Nachbarn und/oder die Überprüfung des Vorhersagbarkeitskriteriums und/oder die Anomalie-Prüfung verwendet werden, wodurch die notwendigen Ressourcen, beispielsweise für die Bestimmung der nächsten Nachbarn oder die Berechnung der Qualitätsstreuung, bedeutend reduziert werden können.

Die transformierten und dimensionsreduzierten Zyklusdaten und/oder Qualitätsdaten können außerdem für die Einstellungsprüfung und/oder alle anderen Berechnungen oder Datenauswertungen der Daten der Datensammlung verwendet werden.

Die Zyklusdaten und/oder die Qualitätsdaten können bevorzugt mittels eines multilinearen Regressionsmodells, insbesondere einer Partial-Least-Squares-Regression und/oder einer Hauptkomponentenregression, transformiert und dimensionsreduziert werden.

Die Zyklusdaten und/oder die aktuellen Zyklusdaten können Prozessdaten beinhalten, die während der vergangenen Zyklen und/oder während des zumindest einen weiteren Zyklus durch Prozessmessung und/oder Auslesen aus einer Maschinensteuerung erhoben werden, wobei die Prozessmessung und/oder das Auslesen der Maschinensteuerung an der Formgebungsmaschine selbst oder einer Formgebungsanlage, welche die Formgebungsmaschine beinhaltet, durchgeführt werden kann/können.

Unter Prozessmessung kann jede wie auch immer geartete Messung einer physikalischen oder chemischen Größe verstanden werden, die während des Zyklus auftritt.

Die Prozessdaten können Zeitreihen von gemessenen oder ausgelesenen Daten beinhalten, die beispielsweise mit definierter (oder auch variabler) Abtastzeit während des Zyklus entstehen. Diese Zeitreihen können direkt Eingang in die Zyklusdaten und/oder weiteren Zyklusdaten finden. Alternativ oder zusätzlich können bevorzugt Kenngrößen (beispielsweise Maximalwerte, Integrale usw.) aus den Zeitreihen extrahiert und in die Datensammlung aufgenommen werden.

Falls das Vorhersagbarkeitskriterium erfüllt ist, kann eine auf den Zyklusdaten und den Qualitätsdaten basierende Qualitätsprognose, beispielsweise in Form zumindest eines Prognosewerts für den zumindest einen Qualitätsparameter, ausgegeben werden.

Die Qualitätsprognose kann mittels zumindest eines der folgenden berechnet werden:

- Mittelwert der Qualitätsdaten der Zyklen der zumindest zwei nächsten Nachbarn, vorzugsweise gewichtet nach Abständen der zumindest zwei nächsten Nachbarn von den aktuellen Zyklusdaten
- Median der Qualitätsdaten der Zyklen der zumindest zwei nächsten Nachbarn
- multilineares Regressionsmodell

Das multilineare Regressionsmodell kann beispielsweise eine sogenannte "partial least squares" Regression (PLSR) oder eine Hauptkomponentenregression (PCR) sein, die an sich im Stand der Technik bekannt sind.

Auch Kombinationen aus Mittelwertbildung und einem multilinearen Regressionsmodell sind möglich, beispielsweise wenn die Qualitätsdaten mehr als einen Qualitätsparameter beinhalten.

Gemeinsam mit der Qualitätsprognose, insbesondere dem zumindest einen Prognosewert für den zumindest einen Qualitätsparameter, kann ein Konfidenzbereich ausgegeben werden, innerhalb dessen die tatsächliche Qualität oder das tatsächliche Qualitätsdatum mit vorgegebener Wahrscheinlichkeit liegt.

Alternativ oder zusätzlich kann zumindest eines der folgenden vorgesehen sein, falls die Qualitätsprognose, insbesondere der zumindest eine Prognosewert, nicht in den vorgegebenen Toleranzbereich fällt:

- Ausgeben einer vierten Meldung und/oder
- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder
- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Dies kann für zumindest einen nachfolgenden Zyklus, vorzugsweise mehrere nachfolgenden Zyklen geschehen.

Das vorgegebene Toleranzband kann beispielsweise vom Bediener eingegeben werden und/oder auf gewünschten Qualitätsanforderungen, Daten aus der Konstruktionsphase des Formteils und/oder des Formwerkzeugs oder dergleichen basieren.

Falls das Vorhersagbarkeitskriterium nicht erfüllt ist, kann für zumindest einen nachfolgenden Zyklus - vorzugsweise mehrere nachfolgende Zyklen - zumindest eines der folgenden durchgeführt werden:

- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder
- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Das heißt, es kann sinnvoll sein, eine Stichprobe der Qualität der hergestellten Formteile anzufordern, wenn die Vorhersagbarkeit nicht gegeben ist. Dies kann für eine definierte Anzahl von Zyklen geschehen.

Es ist zu bemerken, dass die erste Meldung und/oder die zweite Meldung und/oder die dritte Meldung als menschlich verständliche Meldung (bspw. Text, Diagramm und/oder Warnton) oder als für Maschinen verständliche Meldung ausgegeben werden kann (bspw. nur Ansteuern der Ausschussweiche).

Bei der Vorrichtung zum Erheben von Qualitätsdaten kann es sich beispielsweise um ein optisches oder Infrarot-System zum automatischen Erfassen von Qualitätsmerkmalen eines Formteils handeln, die im Stand der Technik an und für sich bekannt sind.

Beispielsweise wenn eine solche Einrichtung nicht vorhanden ist, kann auch einfach ein Bediener zum Überprüfen der Qualitätsdaten aufgefordert werden, beispielsweise durch (optisches oder akustisches) Ausgeben eines Hinweises. Der Hinweis kann in gewissen Ausführungsformen auch einfach nur darin bestehen, dass die Ausschussweiche betätigt wird und dadurch ein auf Qualität zu prüfendes Formteil zu einem Bediener oder einer anderen Person zum Prüfen der Qualität des Formteils gelangt.

Es kann vorgesehen sein, dass

- eine Auswertung all jener Arbeitspunkte (Zyklusdaten) des Formgebungsprozesses und/oder der Qualitätsdaten ausgegeben wird, wofür das Vorhersagbarkeitskriterium nicht erfüllt ist, und/oder
- zeitliche Änderungen der Zusammenhänge zwischen den Zyklusdaten und den Qualitätsdaten ausgeben werden.

Es kann vorgesehen sein, dass

- die aktuellen Zyklusdaten den Zyklusdaten hinzugefügt werden und/oder

- falls aktuelle Qualitätsdaten - insbesondere jene, die nach Aktivieren einer Vorrichtung zum Erheben von Qualitätsdaten, nach Auffordern eines Bedieners zum Erheben der Qualitätsdaten und/oder Ansteuern einer Ausschussweiche durch einen Bediener oder die Vorrichtung zum Erheben von Qualitätsdaten bereitgestellt werden - für den zumindest einen weiteren Zyklus vorliegen, die aktuellen Qualitätsdaten den Qualitätsdaten hinzugefügt werden.

Dadurch können die aktuellen Zyklusdaten und/oder aktuellen Qualitätsdaten für die darauffolgenden Zyklen bereits in der Datensammlung bereitstehen, um eine bessere Vorhersage der Qualität der dann produzierten Formteile zu erzielen. Auf Verschiebungen im Arbeitspunkt des Formgebungsprozesses kann auf diese Weise einfach, effektiv und schnell reagiert werden.

Alternativ oder zusätzlich können auch Zyklusdaten und/oder Qualitätsdaten wieder aus der Datensammlung entfernt werden, beispielsweise wenn sie schon ein gewisses Alter haben - d. h. seit der Gewinnung der Daten schon viel Zeit verstrichen ist oder viele Zyklen durchgeführt wurden - und daher nicht mehr damit gerechnet werden kann, dass sie für den Formgebungsprozess in der aktuellen Form repräsentativ sind.

Anders formuliert, kann die Datensammlung wie folgt angepasst werden:

- Kontinuierliches Überschreiben alter Zyklusdaten und/oder Qualitätsdaten mit aktuellen Zyklusdaten und/oder Qualitätsdaten, wenn ein Abstand zwischen den alten und den aktuellen Zyklusdaten und/oder Qualitätsdaten geringer als ein oder mehrere vorgegebene Grenzwerte ist (gegebenenfalls separat für Zyklusdaten und Qualitätsdaten) und/oder

- Resetmöglichkeit des gesamten Systems für den Fall, dass erhebliche Änderungen an der Formgebungsanlage und/oder Formgebungsmaschine durchgeführt wurden.

Der Ausdruck "Überschreiben" ist hier natürlich im übertragenen Sinne zu verstehen. Die Daten werden also bevorzugt nicht tatsächlich auf dem Datenträger überschrieben, sondern werden auf wie auch immer geartete Weise aus der Datensammlung entfernt und durch die aktuellen Zyklusdaten und Qualitätsdaten ersetzt.

Auf diese Weise kann eine effektive Überwachung des Formgebungsprozesses erzielt werden, ohne mit sich verändernden zugrunde liegenden Daten ständig das Modell mit aufwändigen Techniken des maschinellen Lernens neu trainieren zu müssen. Stattdessen werden Vorhersagen über die Qualität des aktuell hergestellten Formteils mit ständig aktuellen Daten getroffen (sogenanntes "Lazy Learning").

Das Training kann gemäß einer bevorzugten Ausführungsform der Erfindung einfach durch Sammeln der Daten geschehen. Dabei kann zumindest eines der folgenden vorgesehen sein:

- ein Trainingsmodus, wobei Zyklen durchgeführt werden und die gemessenen und/oder erhobenen Zyklusdaten und/oder Qualitätsdaten der Datensammlung hinzugefügt werden, und/oder
- falls der Abstand neu erhobener und/oder gemessener Zyklusdaten von bereits vorliegenden (historischen) Zyklusdaten einen vorgegebenen maximalen Abstand nicht überschreitet, die neu erhobenen und/oder gemessenen Zyklusdaten den Zyklusdaten hinzugefügt werden, und/oder
- falls stichprobenhafte oder sonstige Messungen oder Erhebungen der Qualität durchgeführt werden, werden diese den Qualitätsdaten, vorzugsweise mit Zuordnung zum jeweiligen Zyklus, hinzugefügt (und natürlich werden die Zyklusdaten des Zyklus zu den Zyklusdaten hinzugefügt).

Es kann vorgesehen sein, dass die Datensammlung aus Zyklusdaten und Qualitätsdaten und gegebenenfalls ein dazugehöriges mathematisches Modell (beispielsweise ein multilineares Regressionsmodell) für eine Konfiguration einer Formgebungsmaschine abgespeichert werden und bei Wiederaufnahme der Produktion mit dieser Konfiguration verfügbar sind. Bei Spritzgießmaschinen könnte eine Maschinenkonfiguration beispielsweise durch eine Werkzeug/Material-Kombination gegeben sein.

Beispiele für Größen, die als Zyklusdaten verwendet werden können, wären: Maximal- und Mittelwerte von Spritzdruck, Drehmoment, Einspritzzeiten, Dosierzeiten, Spritzdruckkurve oder das Dosiermoment.

Darüber hinaus können beispielsweise Zykluszeiten, Zyklusteilzeiten, Parameter von Peripheriegeräten (Dosiergeräte, externer Heißkanal, Temperiergeräte) und/oder Parameter aus anderen Prozessüberwachungssystemen oder Prozessassistenzsysteme Teil der Zyklusdaten sein.

Beispiele für Qualitätsdaten wären: Formteilgewicht, Abmessungen oder Oberflächenbeschaffenheit.

Im Sinne der Erfindung kann die Datensammlung lokal bei der Formgebungsmaschine gespeichert sein. Das ist aber nicht zwingend notwendig. Beispielsweise kann die Datensammlung auch in einem Cloud-Speicher gespeichert sein.

Analog dazu kann auch die Prozessoreinheit, welche zum Ausführen des erfindungsgemäßen Computerprogrammprodukts bestimmt ist, an der Formgebungsmaschine angeordnet sein oder als Cloud-Rechner realisiert sein.

Weitere Vorteile und Einzelheiten ergeben sich aus den Figuren sowie der dazugehörigen Figurenbeschreibung. Dabei zeigen:

Fig. 1　　　　ein Flussdiagramm eines Ausführungsbeispiels eines erfindungsgemäßen Verfahrens,

Fig. 2a und 2b　zwei Diagramme zur Veranschaulichung der Partial-Least-Squares-Regression,

Fig. 3　　　　ein Diagramm zur Verdeutlichung von winkelbasierter Ausreißer-Detektion,

Fig. 4　　　　ein Diagramm eines Verlaufs eines tatsächlichen und eines mittels Lazy Learning vorhergesagten Prozessparameters,

Fig. 5　　　　ein Flussdiagramm zur Inbetriebnahme und zum Betrieb eines Verfahrens gemäß der Erfindung sowie

Fig. 6　　　　schematische Darstellung einer Formgebungsanlage gemäß der Erfindung.

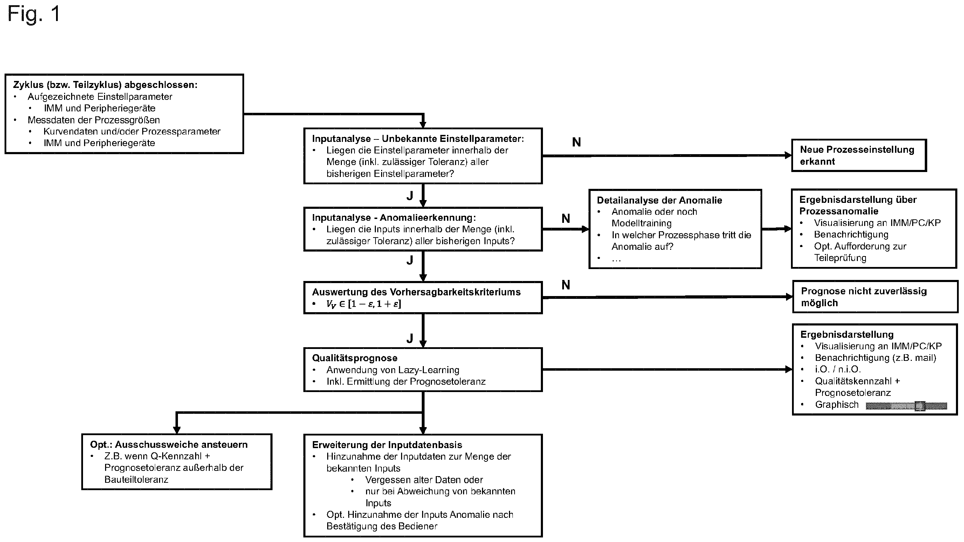

Fig. 1 zeigt zunächst ein überblicksmäßiges Flussdiagramm eines Ausführungsbeispiels eines erfindungsgemäßen Verfahrens. Sobald ein Zyklus oder zumindest ein Teil des Zyklus (Teilzyklus) abgeschlossen ist, kann das Verfahren beginnen.

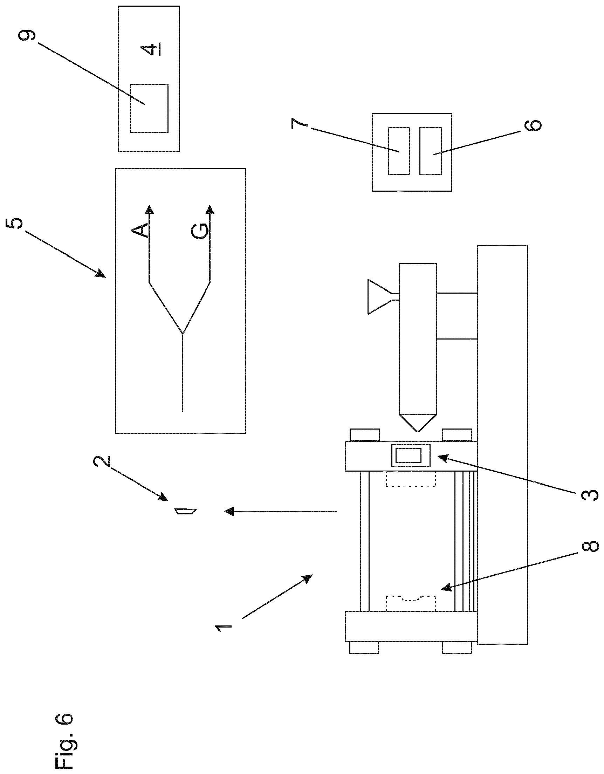

Zu bemerken ist, dass die erforderlichen aktuellen Zyklusdaten, die Einstelldaten und Prozessdaten beinhalten, als Messwerte vorhanden sein können oder von einer Maschinensteuerung 3 der Formgebungsmaschine 1 (siehe Fig. 6) ausgelesen werden können. Die Maschinensteuerung 3 der Formgebungsmaschine 1 kann auch als Bedienschnittstelle dienen.

Zunächst werden im Rahmen der "Inputanalyse - Unbekannte Einstellparameter" (Einstellungs-Prüfung) die Einstelldaten daraufhin überprüft, ob sie von den Einstelldaten, die als Teil der Zyklusdaten vorliegen, einen Abstand haben, der kleiner als ein vorgebbarer Einstellungs-Maximalabstand ist.

Ist das nicht der Fall (Entscheidungszweig N), kann die dritte Meldung ausgegeben werden, die beispielsweise mitteilt, dass eine neue Prozesseinstellung erkannt wurde.

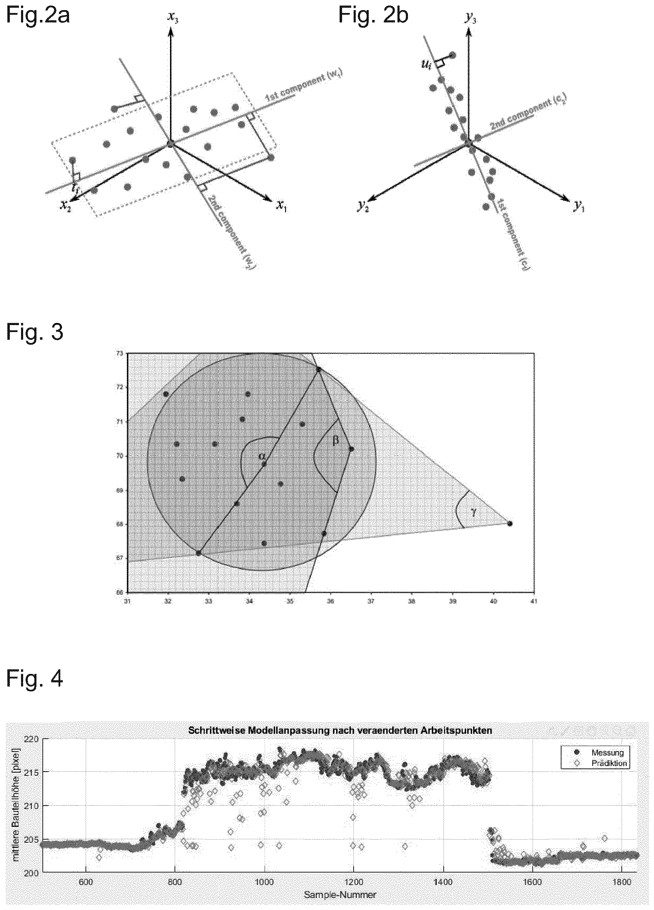

Verläuft die Einstellungs-Prüfung positiv (Entscheidungszweig J), wird als nächstes die "Inputanalyse - Anomalieerkennung" (Anomalie-Prüfung) durchgeführt. Dabei wird überprüft, ob die aktuellen Zyklusdaten in einem Nahebereich der in der Datensammlung enthaltenen Zyklusdaten liegen (siehe Fig. 2a und 2b). Zu beachten ist, dass hier nicht nur die in den aktuellen Zyklusdaten und den Zyklusdaten enthaltenen Einstelldaten miteinander verglichen werden, sondern nach Möglichkeit alle vorhandenen (aktuellen) Zyklusdaten inklusive aller Prozessdaten.

Schlägt die Anomalie-Prüfung fehl, d. h. wird ein Ausreißer erkannt (Entscheidungszweig N), kann optional eine "Detailanalyse der Anomalie" (des Ausreißers) durchgeführt werden. Befindet sich das Verfahren beispielsweise noch in einer Trainingsphase, kann die nachfolgende zweite Meldung unterdrückt oder mit einem entsprechenden Hinweis versehen werden.

Anschließend oder parallel zur Detailanalyse der Anomalie kann die zweite Meldung ausgegeben werden, falls ein Ausreißer erkannt wird (Entscheidungszweig N), in diesem Ausführungsbeispiel in Form einer "Ergebnisdarstellung über [die] Prozessanomalie".

Dies kann beispielsweise eine Analyse des Ausreißers beinhalten, die an einer Bedienschnittstelle der Formgebungsmaschine - in diesem Ausführungsbeispiel eine Spritzgießmaschine (abgekürzt IMM, für Englisch "injection moulding machine") oder an einem PC für Bediener dargestellt wird, gegebenenfalls über ein Internet-basiertes Kundenportal des Herstellers der Formgebungsmaschine 1.

Außerdem können Bediener mit der zweiten Meldung dazu aufgefordert werden, das produzierte Formteil auf Qualität zu prüfen.

Wird kein Ausreißer erkannt (Entscheidungszweig J), kann die Prüfung des Vorhersagbarkeitskriteriums durchgeführt werden.

Stellt sich heraus, dass das Vorhersagbarkeitskriterium nicht erfüllt ist, wird die erste Meldung ausgegeben (im Flussdiagramm aus Fig. 1 nicht explizit dargestellt).

Dabei kann beispielsweise einfach eine Textmeldung ausgegeben werden, wonach eine Qualität und/oder ein Qualitätsdatum des mit dem zumindest einen weiteren Zyklus hergestellten Formteils nicht zuverlässig vorhersagbar ist (und daher eine Qualitätsüberwachung für diesen Zyklus nicht oder nur eingeschränkt zur Verfügung steht).

Alternativ oder zusätzlich kann zumindest eines der folgenden durchgeführt werden:

- Aktivieren einer Vorrichtung zum Erheben von Qualitätsdaten und/oder
- Auffordern eines Bedieners zum Erheben der Qualitätsdaten und/oder
- Ansteuern einer Ausschussweiche und/oder

- Ablegen zumindest eines im zumindest einen weiteren Zyklus hergestellten Formteils in einer Prüfablage und/oder
- Markierung zumindest eines im zumindest einen weiteren Zyklus hergestellten Formteils.

Falls das Vorhersagbarkeitskriterium nicht erfüllt ist (Entscheidungszweig N) und falls das zur Vorhersage der Qualität oder des Qualitätsdatums verwendete Modell oder die entsprechenden Daten dies zulassen, könnte in diesem Fall trotzdem eine (weiter) extrapolierte Vorhersage der Qualität oder des Qualitätsdatums berechnet und ausgegeben werden.

Ist das Vorhersagbarkeitskriterium erfüllt (Entscheidungszweig J), kann die Qualitätsprognose erstellt werden. Bevorzugt kann dies mittels Lazy Learning geschehen.

Es kann ebenso vorgesehen sein, dass eine "Prognosetoleranz", d. h. ein Konfidenzbereich, mit der Prognose ausgegeben wird.

In diesem Ausführungsbeispiel ist außerdem vorgesehen, dass die aktuellen Zyklusdaten zu den Zyklusdaten hinzugefügt werden ("Erweiterung der Input-Datenbasis"). Es ist zu bemerken, dass die Datensammlung auch als "Datenbasis" bezeichnet werden könnte. Die Zyklusdaten könnten auch als "Inputs" bezeichnet werden.

Das Hinzunehmen der aktuellen Zyklusdaten muss aber nicht unter allen Umständen geschehen. Beispielseise könnte dies nur geschehen, wenn eine Abweichung (gewisser Größe) der aktuellen Zyklusdaten von den Zyklusdaten vorliegt. Alternativ kann dies auch geschehen, wenn beispielsweise ein Ausreißer erkannt wurde, vom Bedienpersonal aber bestätigt wurde, dass es sich doch um einen "normalen" Zyklus gehandelt hat.

Außerdem können optional gewisse Elemente der Zyklusdaten aus der Datensammlung entfernt werden.

Auf einzelne Schritte im in Verbindung mit Fig. 1 beschriebenen Verfahren wird etwas weiter unten genauer eingegangen.

Optional könnte, wie erwähnt, die Ausschussweiche angesteuert werden, wenn beispielsweise ein Qualitätsparameter oder eine Qualitätskennzahl (als Vorhersage eines Qualitätsdatums) und/oder der entsprechende Konfidenzbereich außerhalb des Toleranzbereichs für die Qualität des Formteils (könnte auch als Bauteil bezeichnet werden) liegt.

Es ist darauf hinzuweisen, dass die erste Meldung, die zweite Meldung und die dritte Meldung nicht in chronologischer Reihenfolge ausgegeben werden müssen. Tatsächlich ist es in bevorzugten Ausführungsformen so, dass allenfalls eine dieser Meldungen ausgegeben wird.

Die in Verbindung mit Fig. 1 beschriebenen Verfahrensschritte werden im nachfolgend beschriebenen Ausführungsbeispiel konkreter beschrieben. Es handelt sich hierbei um einen Spritzgießprozess als Beispiel eines Formgebungsprozesses, wobei je Zyklus ein oder mehrere Formteile 2 hergestellt werden. Das so hergestellte Formteil 2 oder die Gesamtheit der in einem Zyklus hergestellten Formteile 2 können auch als Einheit oder Produkt bezeichnet werden.

Folgende Daten werden erhoben:

- Die Spritzgießmaschine zeichnet zyklusbasierte Einzelwerte sowie Zeitreihen auf (Zyklusdaten).
- Außerdem werden für die Qualitätsprädiktion zyklusbasiert Merkmale des Bauteils vermessen, zum Beispiel eine Bauteillänge oder das Gewicht (QualitätsDaten).

Die Art und Anzahl der aufgezeichneten Signale bleibt dabei über die Laufzeit des Prognosesystems möglichst unverändert.

In der Praxis werden Qualitätsmessungen der Bauteile oft manuell und dann nur stichprobenartig vorgenommen. Dies ist einerseits ein wesentlicher Grund für die Relevanz einer Qualitätsprognose. Andererseits kann das hier beschriebene System auch helfen, geeignete Zyklen zur Stichprobenentnahme zu bestimmen. Schließlich beinhalten die Berechnungen schon eine reine Zyklusdaten-Analyse, die auch genutzt werden kann, um den Prozess zu bewerten, ohne dass Qualitätsmessungen nötig sind.

In diesem Beispiel werden pro Zyklus

- $p$ verschiedene zyklusbasierte Werte aufgezeichnet $(u_1, ... u_p)$.

  ○ z. B. Maximal- und Mittelwerte von Spritzdruck, Drehmoment, Einspritzzeiten, Dosierzeiten, usw.

- $q$ verschiedene Zeitreihen mit jeweils s Samples $(W_{1,1:s}, ... W_{q,1:s})$.

  ○ z. B. die Spritzdruckkurve, das Dosiermoment, ... sowie **1** Wert der Qualitätsmessung (z. B. das Bauteilgewicht) genommen.

Da die Samplerate der Zeitreihen sehr hoch ist, werden die Daten um 1/f downgesampelt. Alternativ können aus den Zeitreihen auch nur gewisse Features verwendet werden, wie Anstiegszeiten, Minima, Maxima oder Durchschnittswerte.

Damit    ergeben    sich    pro    Zyklus

$$m = p + \left( q * \frac{s}{f} \right)$$

Zykluswerte und **1** Qualitätswert.

Das System benötigt eine initiale Datenbasis (d. h. die Datensammlung), bevor Anomalien erkannt und Qualitätsmerkmale vorhergesagt werden können. Diese kann einerseits geladen werden, beispielsweise aus einem früheren Produktionslos des gleichen Formteils 2, oder auch während der Produktionszeit gesammelt werden.

Bei n Samples (Zyklen) in der Datenbasis ergibt sich damit insgesamt eine Datengrundmenge von n*m Werten plus n Targetwerten (Qualitätswerte eines Qualitätsparameters).

## Datenaufbereitung & Modellbildung zur Dimensionsreduktion

Da in allen folgenden Berechnungen die Absolutwerte der einzelnen Signale in das Modell eingehen, ist es vorteilhaft, die Zyklusdaten zu normieren. Dies gewährleistet, dass Schwankungen aller Signale, unabhängig von ihrer Einheit, gleichermaßen in das Modell eingehen. Zur Normierung können gängige Normierungsmethoden verwendet werden, wie z. B. ZScore, oder die Normierung der initialen Datenbasis auf den Bereich [0,1] bzw. [-1,1].

Um anschließend das System auf neue Daten (die aktuellen Zyklen) anzuwenden, müssen diese aktuellen Zyklusdaten mit den gleichen Normierungsparametern der initialen Datenbasis normiert werden. Die Normierungsparameter werden daher auch mitgespeichert. Für eine Normierungsmethode mit beispielsweise 2 Parametern wären das zusätzliche 2*(p+q) Werte.

Im nächsten Schritt werden die Zyklusdaten so transformiert, dass die Anzahl ihrer Dimensionen stark reduziert wird und ihre aussagekräftigsten Elemente in Bezug auf die Target-Varianz betont werden.

Diese Transformation wird in diesem Ausführungsbeispiel durch ein an sich bekanntes Partial Least Squares (PLS)-Regressions-Modell erreicht, auf deren Grundeigenschaften im Folgenden kurz eingegangen wird:

PLS ist, ähnlich der Hauptkomponentenanalyse (Principal Component Analysis, PCA), ein lineares Modell $t(s) = \theta^{\mathbf{T}} \mathbf{m}(s)$, um fundamentale Zusammenhänge zweier Matrizen (hier Zyklus- und Target-Daten) zu beschreiben, mit

$t(s)$    Qualitätsmerkmal (Target) des Zyklus s

$\theta^{\mathbf{T}}$    Parametervektor

$\mathbf{m}(s)$    Zyklusdaten des Zyklus $s$.

Ein Vorteil gegenüber klassischen linearen Regressionen ist, dass die Berechnung von $\theta^{\mathbf{T}}$ auch bei linear abhängigen Variablen (Zyklusdaten) möglich ist.

Der Parametervektor $\theta^{\mathbf{T}}$ wird wie folgt berechnet:

1. Transformation in neuen Vektorraum $(\tilde{t}, \tilde{\mathbf{m}})$: In diesem beschreiben die ersten Einträge des Vektors $\tilde{\mathbf{m}}$ die größte Varianz der transformierten Zielgröße $\tilde{t}$.
2. Auswahl der wichtigsten $m_{PLS}$ Einträge (= Komponenten) von $\tilde{\mathbf{m}}$.

3. Berechnung des Regressionsvektors $\tilde{\theta} = (\tilde{M}_r{}^T \tilde{M}_r)^{-1} \tilde{M}_r{}^T \tilde{t}_r$, $\tilde{M}_r$... Datenmatrix ($\tilde{M}_r = [\tilde{m}_r(s\_1), \tilde{m}_r(s\_2), \tilde{m}_r(s\_3) ... ]$)

4. Rücktransformation von $\tilde{\theta} \rightarrow \theta$

Für die Dimensionsreduktion wesentlich sind die Schritte 1 und 2, wobei die reduzierte Anzahl an Dimensionen $m_{PLS} < m$ ein Hyperparameter des Systems ist, der vorgegeben werden kann. Der Index $r$ bezeichnet hier die dimensionsreduzierten Größen im transformierten Raum. Die ursprüngliche Datengrundmenge **M** mit $m*n$ Werten wurde also reduziert auf $\tilde{M}_r$ mit $m_{PLS}*n$ Werten.

Die ($m_{PLS}$) Hauptkomponenten beschreiben den größten Teil der Kovarianz zwischen den beiden ursprünglichen Räumen der Eingangs- und Targetparameter. Das ist in Fig. 2a und Fig. 2b veranschaulicht (Bildquelle: learnche.org) . Die ersten beiden Komponenten sollen die Punkte im Input-Raum (links) und im Target-Raum (rechts) sowie deren Zusammenhang möglichst gut erklären. Darüber hinaus sind sie im Input-Raum orthogonal.

Die PLS-Komponenten entsprechen keinen realen Signalen der Maschine, sondern einer Linearkombination aus den Maschinensignalen und bilden die Basis des neuen dimensionsreduzierten Raumes.

Die Anzahl der Komponenten $m_{pLS}$ ist dabei einer der Hauptparameter des Systems, der entweder gesetzt werden kann oder aber automatisiert bestimmt wird.

Während die Anzahl zyklusbasierter Einzelwerte $p$ typischerweise eine Größenordnung von 50-500 zyklischen Parametern enthält und die Gesamtanzahl der Zyklusdaten $m$ bei inkludierten Zeitreihendaten in hohen Samplingraten mehrere 10.000 erreichen kann, liegt die Anzahl der PLS-Komponenten $m_{PLS}$ typischerweise im Bereich 10-20.

Durch diesen Schritt kann also eine deutliche Dimensionsreduktion bei moderatem Informationsverlust erzielt werden.

Das berechnete PLS-Modell wird anschließend benutzt, um die Input-Daten auf den (dimensions-) reduzierten Raum der PLS-Komponenten zu projizieren. In diesem Raum werden alle folgenden Analysen durchgeführt.

Zur Transformation der ursprünglichen Inputdaten in den dimensionsreduzierten Raum wird in den nächsten Schritten eine Projektionsmatrix mit $m*m_{PLS}$ Werten benötigt und daher gespeichert.

### Zusammenfassung der gespeicherten Parameter

Bei einer Datenbasis, die n Zyklen und 1 Qualitätsmerkmal (Target) umfasst, werden folgende Werte (allesamt reale Dezimalzahlen) benötigt und daher gespeichert:

1. Die transformierte (auf PLS-Komponenten projizierte) und normierte Zyklusdaten-Basis:

- Eine Matrix mit $n * m$ Werten.

2. Die Targetwerte, die zu den Zyklen der Datenbasis gehören

- Ein Vektor mit $n$ Werten (pro Target).

3. Die untransformierte Datenbasis ohne Normierung

- Eine Matrix mit $n * m$ Werten.

4. Die Normierungsparameter

- Eine Matrix mit $2 * (p + q)$ Werten für die gängigen Methoden zScore oder MinMax-Normierung.

5. Die Projektionsmatrix des PLS-Modells

- Eine Matrix mit $m * m_{PLS}$ Werten, wobei $m_{PLS}$ ein Modellparameter ist.

### Ausreißer-Detektion (Anomalieprüfung)

Im laufenden Betrieb des Systems wird für jeden Zyklus ein neues Set an Zyklusdaten von der Spritzgießmaschine und angeschlossenen Peripheriegeräten erfasst. Diese Daten werden vom System zuerst unter Verwendung der gespeicherten Normierungsparameter normiert. Anschließend werden die normierten Zyklusdaten unter der Verwendung des PLS-Modells auf den Raum der PLS-Komponenten projiziert.

Nun beginnt eine Analyse, die im Wesentlichen zwei Fälle unterscheiden soll:

1) Liegt der Punkt der neuen Zyklusdaten im PLS-Raum in der Nähe bereits bekannter Punkte aus der Zyklusdatenbasis?

2) Liegt der Punkt der neuen Zyklusdaten im PLS-Raum außerhalb bereits bekannter Regionen?

Im ersten Fall lässt sich eine Vorhersage des Qualitätsmerkmals auf Basis der aktuellen Zyklusdaten des Bauteils treffen.

Der zweite Fall entspricht einem Ausreißer der Zyklusdaten und hier ist eine Qualitätskontrolle des Bauteils dieses Zyklus zu empfehlen. Der erfasste Qualitätswert kann anschließend mit den Zyklusdaten zur bereits bekannten Datenbasis hinzugefügt werden, um in Zukunft eine Qualitätsprognose basierend auf ähnlichen Zyklusdaten durchzuführen.

Zur Anomalie-Prüfung und somit zur Unterscheidung zwischen diesen beiden Fällen kann beispielsweise die winkelbasierte Ausreißer-Detektion (Englisch: Angle-Based Outlier-Detektion, ABOD) verwendet werden.

Hierbei werden vom neuen Punkt zu allen möglichen Paaren von Elementen der Datenbasis jeweils zwei Geraden gezogen und der Winkel zwischen ihnen bestimmt. Ist die Verteilung dieser Winkel zufällig und gleichmäßig verteilt, liegt der neue Punkt inmitten der bereits bekannten Datenpunkte (Fall 1).

Sind alle diese Winkel eher klein, bedeutet das, der neue Punkt liegt weit außerhalb des Clusters bekannter Punkte (Fall 2) .

Die winkelbasierte Ausreißer-Erkennung ist in Fig. 3 (Bildquelle: researchgate.net) verdeutlicht. Während ein Punkt im Zentrum des Clusters eine Winkelverteilung bis 180° aufweist und auch im Grenzfall (beta) noch eine gewisse Breite erreicht wird, ist der Ausreißer durch eine schmalbandige Winkelverteilung gekennzeichnet.

Kein Ausreißer: Überprüfung des Vorhersagbarkeitskriteriums und mögliche Qualitätsprädiktion mittels k nächster Nachbarn.

Liegen also die Zyklusdaten eines neuen Zyklus innerhalb eines Bereiches im Raum der PLS-Komponenten, in dem schon hinreichend viele (historische) Zyklusdaten liegen, wird das Vorhersagbarkeitskriterium überprüft und der zum aktuellen Zyklus gehörige Qualitätswert (das aktuelle Qualitätsdatum) kann prognostiziert werden.

Dies geschieht mit folgender Methode:

1. Im Raum der PLS-Komponenten wird die Distanz des aktuellen Zyklusdatenpunktes zu allen Punkten aus der Datenbasis berechnet. Hierzu können unterschiedliche Distanzmetriken, wie die Manhattan-Metrik oder die Euklidische Metrik, verwendet werden.

2. Die k Datenpunkte mit der geringsten Distanz zum neuen Datenpunkt, bezeichnet als die k nächsten Nachbarn kNN, werden ausgewählt.

3. Nun wird das Vorhersagbarkeitskriterium überprüft.

a. Der Quotient

$$V_Z = \frac{\max\big(dist(Z_{kNN})\big)}{quant_{95}\big(dist(Z)\big)}$$

wird über die Zyklusdaten berechnet, wobei $\max(dist(Z_{kNN}))$ die maximale Distanz der $k$ nächsten Nachbarn untereinander beschreibt und $quant_{95}(dist(Z_{kNN}))$ den 95 % Quantilwert der Abstände der $k$ nächsten Nachbarn zu allen anderen Zyklusdaten bezeichnet.

b. Im zweiten Schritt wird der Quotient

$$V_Q = \frac{\max(Q_{kNN}) - \min(Q_{kNN})}{quant_{95}(Q) - quant_{5}(Q)}$$

über die Qualitätsdaten berechnet. Dabei beschreiben $\min(Q_{kNN})$ und $\max(Q_{kNN})$ den minimalen und maximalen Qualitätswert der $k$ nächsten Nachbarn und $quant_5(Q_{fcNN})$ sowie $quant_{95}(Q_{kNN})$ das 5 % bzw. 95 % Quantil aller Qualitätswerte in der Datenbasis.

$$V_V = \frac{v_Z}{v_Q}$$

Liegt nun der Quotient in einem definierten Intervall um 1 , so ist das Vorhersagbarkeitskriterium erfüllt. Dabei deutet $V_V < 1$ auf eine verhältnismäßig große Streuung der Qualitätsdaten der nächsten Nachbarn hin und damit auf eine unzulässige Vorhersagbarkeit, während $V_V > 1$ eine verhältnismäßig starke Streuung der Zyklusdaten der nächsten Nachbarn anzeigt und damit einen unzureichenden Zusammenhang zwischen Qualitäts- und Zyklusdaten in dieser Umgebung. Das Intervall um 1 wird mit dem Parameter $\varepsilon$ zu [1 - $\varepsilon$, 1 + $\varepsilon$] definiert.

4. Wenn das Vorhersagbarkeitskriterium nicht erfüllt ist, so wird eine Meldung ausgegeben, dass das Qualitätsdatum im aktuellen Arbeitspunkt des Formgebungsprozesses nicht zuverlässig vorhersagbar ist.

5. Ist das Vorhersagbarkeitskriterium erfüllt, so kann das prognostizierte Qualitätsmerkmal z. B. als das Distanzgewichtete Mittel der Qualitätswerte der k nächsten Nachbarn berechnet werden:

$$Q_{praed} = \frac{\sum_{i=1}^{k} \frac{Q_i}{dist_i^2}}{\sum_{i=1}^{k} \frac{1}{dist_i^2}}$$

Der Parameter $k$, also die Anzahl der nächsten Nachbarn, ist ein Hauptparameter des Algorithmus, neben $m_{PLS,}$ der Anzahl der PLS-Komponenten.

Es ist zu erwarten, dass der Parameter $\varepsilon$ universell gewählt werden kann. Im vorliegenden Ausführungsbeispiel wurden mit 2 = 0,1 sehr gute Ergebnisse erzielt.

Ausreißer: Hinzufügen eines/mehrerer neuen/neuer Samples zur Datenbasis

Liegt mit den Daten eines neuen Zyklus ein Ausreißer vor, kann dieser wie folgend beschrieben zur Datenbasis hinzugefügt werden. Somit lernt der Algorithmus neue Arbeitspunkte des modellierten Spritzgießprozesses dazu.

Im Fall eines Ausreißers der Zyklusdaten bzw. eines Datenpunktes in noch nicht ausreichend beschriebenem Umfeld, wird vom System eine Qualitätsbeurteilung des Bauteils angefordert. Dies kann entweder als Hinweis an den Benutzer oder auch als Trigger eines automatischen Qualitätsmesssystems oder einer Ausschussweiche erfolgen.

Damit unterstützt der Algorithmus bei der Entnahme geeigneter Stichproben, da er vor allem dann Qualitätsmessungen empfiehlt, wenn die Zyklusdaten noch nicht aus der Historie bekannt sind.

Der vollständige Datensatz des Zyklus aus $m + 1$ Rohwerten (m Zykluswerte und 1 Qualitätswert) wird dabei genauso gespeichert wie die $m_{PLS}$ Werte, die den Zyklusdatenpunkt im transformierten Raum beschreiben.

Bereits im nächsten Zyklus hat das System bei der Analyse der Zyklusdaten sowie der Qualitätsprognose die erweiterte Datenbasis zur Verfügung.

Anmerkung: Unter der Annahme, dass sich die Zyklusdaten und die Qualitätswerte im Spritzgussprozess nicht sprunghaft verändern, können einige neue Datenpunkte zur Datenbasis hinzugefügt werden, bevor die Normierungsparameter sowie das PLS-Modell neu berechnet werden müssen.

Außerdem ist es sinnvoll, nach einem Ausreißer mehrere Qualitätsmessungen hintereinander durchzuführen und die Datenbasis um die neuen Zyklusdaten und Qualitätswerte zu erweitern. Das dient einerseits dazu, sicherzustellen, dass die Bauteilqualität (auch außerhalb der dem System historisch bekannten Arbeitspunkte des Prozesses) in Ordnung ist, und andererseits dazu, einen neuen Arbeitspunkt der Zyklusdaten schnell und umfassend in der Datenbasis abzubilden. Als minimal notwendige Anzahl neuer Qualitätsmessungen kann z.B. die Anzahl der nächsten Nachbarn $k$ herangezogen werden.

Entfernen eines Elements der Datensammlung / Datenbasis

Um die Rechenaufwände sowie den Speicherplatz des Systems gering zu halten, ist es sinnvoll, die Anzahl der Datenpunkte in der Datenbasis nicht beliebig anwachsen zu lassen. Hierzu kann der aktuelle Datenpunkt einen alten aus der Datenbasis ersetzen, mit dem Ziel, alle vorkommenden Arbeitsbereiche des Prozesses gleichmäßig abzubilden.

Dies ist gewährleistet, wenn die folgenden Kriterien (1)-(3) erfüllt sind, wobei im ersten Schritt die k nächsten Nachbarn ermittelt werden müssen.

(1) Liegt der aktuelle Qualitätsmesswert zwischen dem Minimal- und Maximalwert der Qualitätsmesswerte der $k$ nächsten Nachbarn?

(2) Ist das Verhältnis $$\frac{\max(distance(Z_i, Z_{kNN}))}{\max(distance(Z_i, Z))}$$ kleiner als ein gesetzter Grenzwert $G_z \in [0,1]$? Hierbei bezeichnet $\max(distance(Z_i, Z_{kNN}))$ den maximalen Abstand der aktuellen Zyklusdaten von den $k$ nächsten Nachbarn im Raum der PLS-Komponenten und $\max(distance(Z_i, Z))$ den maximalen Abstand der aktuellen Zyklusdaten von den Zyklusdaten im Raum der PLS-Komponenten.

(3) Ist das Verhältnis $$\frac{\max(distance(Q_i, Q_{kNN}))}{\max(distance(Q_i, Q))}$$ kleiner als ein gesetzter Grenzwert $G_Q \in [0,1]$? Hierbei bezeichnet $\max(distance(Q_i, Q_{kNN}))$ den maximalen Abstand des aktuellen Qualitätswerts von den Qualitätswerten der k nächsten Nachbarn und $\max(distance(Q_i, Q))$ den maximalen Abstand des aktuellen Qualitätswerts von den Qualitätsdaten.

Wenn alle diese Kriterien erfüllt sind, so wird derjenige nächste Nachbar mit dem geringsten Abstand von den aktuellen Zykluswerten im Raum der PLS-Komponenten durch den neuen ersetzt. Anstatt der Verwendung der Maximalwerte können auch jeweils die 95 % Quantilwerte verwendet werden, um den Einfluss fehlerhafter Messwerte zu unterdrücken.

Weitere Stichproben

Werden zusätzlich zu den vom System auf Basis von Ausreißern vorgeschlagenen Zyklen Stichproben der Qualitätswerte genommen (z. B. auf Basis eines definierten Prüfplans), so können diese Zyklen unter Berücksichtigung der beschriebenen Methode zum Geringhalten der Datenpunkte zur Datenbasis hinzugefügt werden.

Hierbei kann sich die Analyse des neuen Qualitätswerts empfehlen, nämlich ob dieser im Intervall [(1 - $a$) * $\min(Q_{kNN})$, (1 + $a$) * $\max(Q_{kNN})$] liegt, wobei $\min(Q_{kNN})$ und $\max(Q_{kNN})$ den minimalen und maximalen Qualitätswert der k nächsten Nachbarn der Zykluswerte des zum Qualitätswert zugehörigen Zyklus beschreiben. Der Parameter $a$ wird eingeführt, um Messungenauigkeiten ausgleichen zu können.

Liegt der Qualitätswert außerhalb dieses Intervalls, so soll eine neue Stichprobe angefordert werden und anschließend überprüft werden, ob dieser neue Qualitätswert innerhalb des Intervalls liegt, gegebenenfalls für ein neues Set k nächster Nachbarn. Ist dies erfüllt, so werden die Zyklusdaten und der Qualitätswert des neuen Zyklus zur Datenbasis hinzugefügt und die der ersten Stichprobe verworfen. Anderenfalls ist davon auszugehen, dass sich die Zusammenhänge zwischen Zyklusdaten und Qualitätswerten im Prozess verschoben haben und das Modell angepasst werden muss. Hierzu können z. B. so lange Stichproben genommen und die Elemente aus der Datenbasis mit den neuen Elementen überschrieben werden, bis der Qualitätswert der Stichprobe wieder im Intervall [(1 - $a$) * min($Q_{kNN}$), (1 + $a$) * max($Q_{kNN}$)] liegt.

Parameterbestimmung von $m_{PLS}$ und $k$

Die beiden Hauptparameter des Algorithmus, die Anzahl der PLS-Komponente $m_{PLS}$ und die Anzahl der nächsten Nachbarn $k$ können vom Bediener gesetzt oder auch automatisch bestimmt werden.

Die automatische Bestimmung ist jedoch mit einem größeren Rechenaufwand verbunden und geschieht mittels Grid-Search über die beiden Parameter und Crossvalidation. Für den Grid-Search werden Minimal- und Maximalwerte der Parameter ($m_{PLS_{min}}$ und $m_{PLS_{max}}$ sowie $k_{min}$ und $k_{max}$) angegeben und die Anzahl der zu untersuchenden Werte pro Parameter.

Bei der Crossvalidation wird die vorhandene Datenbasis in $n_{cv}$ gleich große und zufällig verteilte Blöcke von Samples zerlegt. Nun wird, in $n_{cv}$ Runden, jeweils einer diese Blöcke wie ein Set neuer Zyklusdaten behandelt und eine Qualitätsprognose erstellt. Da die Qualitätsdaten dieser Samples bereits bekannt sind, kann die Abweichung der Prognose vom tatsächlichen Wert berechnet werden. Der mittlere absolute Fehler (MAE) aus diesen $n_{cv}$ Durchläufen ist ein Indikator für die Prognose-Qualität der gegenwärtigen Datenbasis-Parameter-Kombination.

Grid-Search bedeutet nun, dass diese Berechnung für jede Kombination von k und $m_{PLS}$ im festgelegten Parameterbereich durchgeführt wird.

Jenes Parameter-Set ($m_{PLS}$ und $k$) mit dem geringsten MAE wird schließlich ausgewählt.

Um im laufenden Betrieb auch bei größeren Verschiebungen der Arbeitspunkte des Prozesses eine hohe Modellqualität zu erhalten, können die Parameter $m_{PLS}$ und $k$ nach festgelegten Zeitdauern (z. B. alle 6 Stunden), nach einer festgelegten Zyklenanzahl oder nach einer festgelegten Anzahl an hinzugefügten Samples (Qualitätsstichproben) mit der jeweils aktuellen Datenbasis neu berechnet werden. Dies ist allerdings nur dann sinnvoll, wenn seit der letzten Parameterbestimmung auch zusätzliche Qualitätsstichproben zur Datenbasis hinzugefügt wurden. Da diese Berechnung aufgrund des Grid-Search in der Regel rechenaufwendig ist, kann es sinnvoll sein, diese auf einem externen Rechengerät (z. B. auf einem eigenen Rechencluster in der Cloud) durchzuführen und die optimalen Parameter $m_{PLS}$ und $k$ an das Qualitätsüberwachungssystem zurückzuspielen.

Allerdings zeigt das hier vorgestellte Verfahren ein sehr robustes Verhalten gegenüber Verschiebungen des Arbeitspunkts eines Formgebungsprozesses, wozu auf Fig. 4 verwiesen wird. Es ist darin ein tatsächlicher Qualitätsparameter (mittlere Höhe des Formteils 2) und ein mit dem obigen System vorhergesagter Qualitätsparameter über die Zahl der Zyklen aufgetragen.

Wie zu erkennen ist, wurde eine relativ starke Änderung des Arbeitspunkts des Formgebungsprozesses schon nach etwa 100 Zyklen praktisch vollständig kompensiert (d. h. der neue Arbeitspunkt wurde im Wesentlichen "gelernt").

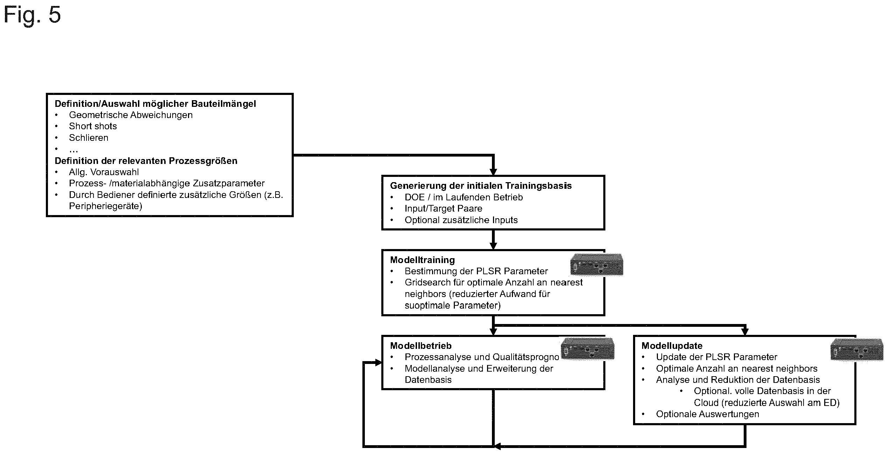

Fig. 5 zeigt ein Flussdiagramm bezüglich der Inbetriebnahme und dem laufenden Betrieb eines Verfahrens gemäß einem Ausführungsbeispiel der Erfindung.

Grundsätzlich ist es bevorzugt, zunächst überhaupt die möglichen Qualitätsmängel ("Bauteilmängel") und die relevanten Prozessparameter ("Prozessgrößen") zu definieren, wobei in Fig. 5 jeweils Beispiele angeführt sind.

Anschließend kann eine initiale Trainingsbasis als grundlegende Datensammlung generiert werden. Daraufhin kann mit dem Training des Modells begonnen werden (siehe dazu oben Parameterbestimmung von $m_{PLS}$ und $k$).

Daraufhin kann das eigentliche Verfahren im laufenden Betrieb der Formgebungsmaschine durchgeführt werden.

Parallel dazu kann die Anpassung der Datensammlung und/oder des Modells durchgeführt werden.

Fig. 6 zeigt schematisch ein erfindungsgemäßes Ausführungsbeispiel einer Formgebungsmaschine 1 als Teil einer Formgebungsanlage.

Die Formgebungsmaschine 1 ist in diesem Ausführungsbeispiel eine Spritzgießmaschine. An der Spritzgießmaschine ist ein Formwerkzeug 8 montiert, welches grundsätzlich separat von der Spritzgießmaschine ist und gewechselt werden kann.

In jedem Zyklus wird ein schematisch dargestelltes Formteil 2 hergestellt.

Eine Ausschussweiche 5 ist in diesem Ausführungsbeispiel vorgesehen.

Ebenfalls vorgesehen ist eine Vorrichtung 4 zum Erheben von Qualitätsdaten. Diese könnte beispielsweise als Waage und/oder oder optische Kamera oder Infrarotkamera ausgeführt sein.

Eine Recheneinheit mit einem Speicher 6 und einer Prozessoreinheit 7 ist ebenfalls vorgesehen. Die Recheneinheit kann beispielsweise als Cloud-Rechner ausgestaltet sein. In bevorzugten Ausführungen ist die Recheneinheit - also der Speicher 6 und die Prozessoreinheit 7 - aber Teil der Maschinensteuerung 3 der Formgebungsmaschine.

Während des laufenden Betriebs - also während wiederholt Zyklen durchgeführt werden - wird beispielsweise das in Verbindung mit Fig. 1 beschriebene Verfahren durchgeführt.

Ist in einem bestimmten Zyklus das Vorhersagbarkeitskriterium nicht erfüllt, kann beispielsweise die Ausschussweiche aktiviert werden, sodass das hergestellte Formteil 2 über den Weg A zur Vorrichtung 4 zum Erheben von Qualitätsdaten gelangt. Konkret könnte das Formteil 2 in einer Prüfablage 9 der Vorrichtung 4 zum Erheben von Qualitätsdaten abgelegt werden. Es ist dann vorstellbar, dass sich die Vorrichtung 4 zum Erheben von Qualitätsdaten automatisch aktiviert, sobald ein Formteil 2 in der Prüfablage 9 abgelegt wird, oder dass die Vorrichtung 4 zum Erheben von Qualitätsdaten über ein separates Aktivierungssignal aktiviert wird.

Ist das Vorhersagbarkeitskriterium schon erfüllt, kann das Formteil 2 als angenommenes Gutteil über den Pfad G normal weiterlaufen.

Die Pfade A und G sind in Anlehnung an die Begriffe "Ausschuss" und "Gutteil" gekennzeichnet. Allerdings kann es natürlich sein, dass das Vorhersagbarkeitskriterium nicht erfüllt ist und das Formteil 2 trotzdem die Erfordernisse in Bezug auf die Qualität erfüllt, also ein Gutteil ist. Dieses Formteil 2 kann dann einfach dem Pfad G zugeführt werden.

In dieser Ausgestaltung ist es nicht notwendig, dass die Vorrichtung 4 zum Erheben von Qualitätsdaten immer aktiv ist und jedes Formteil 2 prüft. Dadurch ist es auch möglich, Vorrichtungen 4 zu verwenden, die mehr Zeit als die Dauer eines Zyklus benötigen, um die Qualitätsdaten zu erheben.

Natürlich sind andere Ausgestaltungen prinzipiell auch denkbar. Beispielsweise könnte statt einer Vorrichtung 4 zum Erheben von Qualitätsdaten auch eine Person die Qualität des Formteils 2 erheben.

Bezugszeichenliste:

| | |
|---|---|
| Formgebungsmaschine | 1 |
| Formteil | 2 |
| Maschinensteuerung | 3 |
| Vorrichtung zum Erheben von Qualitätsdaten | 4 |
| Ausschussweiche | 5 |
| Speicher | 6 |
| Prozessoreinheit | 7 |
| Formwerkzeug | 8 |
| Prüfablage | 9 |

**Patentansprüche**

1. Verfahren zum Überwachen eines in Zyklen durchgeführten Formgebungsprozesses, wobei eine Datensammlung bereitgestellt wird, welche zumindest die folgenden Daten beinhaltet:

   - für vergangene Zyklen jeweils Zyklusdaten des an einer Formgebungsmaschine (1) durchgeführten Formgebungsprozesses und
   - für zumindest einen Teil der vergangenen Zyklen Qualitätsdaten von mit der Formgebungsmaschine (1) hergestellten Formteilen (2),

   und wobei mit der Formgebungsmaschine (1) zumindest ein weiterer Zyklus des Formgebungsprozesses durchgeführt wird sowie aktuelle Zyklusdaten des zumindest einen weiteren Zyklus erhoben werden, **dadurch gekennzeichnet, dass** die folgenden weiteren Schritte durchgeführt werden:

   - Bestimmen zumindest zweier nächster Nachbarn in Form der Zyklusdaten von zumindest zwei der vergangenen Zyklen, sodass die Zyklusdaten der zumindest zwei nächsten Nachbarn näher an den aktuellen Zyklusdaten als diejenigen Zyklusdaten liegen, die nicht zu den zumindest zwei nächsten Nachbarn gehören, wobei für die Bestimmung der zumindest zwei nächsten Nachbarn nur jene vergangenen Zyklen herangezogen werden, wofür Qualitätsdaten in der Datensammlung enthalten sind,
   - Überprüfen eines Vorhersagbarkeitskriteriums, wobei überprüft wird, ob eine Qualitätsstreuung der Qualitätsdaten der Zyklen der zumindest zwei nächsten Nachbarn kleiner als eine Maximalstreuung und/oder größer als eine Minimalstreuung ist, und
   - falls das Vorhersagbarkeitskriterium nicht erfüllt ist, Ausgeben einer ersten Meldung, dass eine Qualität und/oder ein Qualitätsdatum des mit dem zumindest einen weiteren Zyklus hergestellten Formteils (2) nicht zuverlässig vorhersagbar ist.

2. Verfahren nach Anspruch 1, **dadurch gekennzeichnet, dass** die Qualitätsstreuung als - vorzugsweise normierte - Differenz eines Qualitätsmaximalwerts der mindestens zwei nächsten Nachbarn und eines Qualitätsminimalwerts der zumindest zwei nächsten Nachbarn berechnet wird.

3. Verfahren nach einem der vorhergehenden Ansprüche, **dadurch gekennzeichnet, dass** die Qualitätsstreuung der Qualitätsdaten beim Überprüfen des Vorhersagbarkeitskriteriums in einer Form verwendet wird, wobei die Qualitätsstreuung zu einer Zyklusdatenstreuung der Zyklusdaten der zumindest zwei nächsten Nachbarn in Beziehung gesetzt ist.

4. Verfahren nach Anspruch 3, **dadurch gekennzeichnet, dass** die Zyklusdatenstreuung als - vorzugsweise normierte - Maximaldistanz zwischen den zumindest zwei nächsten Nachbarn berechnet wird.

5. Verfahren nach einem der vorhergehenden Ansprüche, **dadurch gekennzeichnet, dass**, falls das Vorhersagekriterium erfüllt ist, eine auf den Zyklusdaten und den Qualitätsdaten basierende Qualitätsprognose berechnet und ausgegeben wird.

6. Verfahren nach Anspruch 5, **dadurch gekenn-**

zeichnet, dass die Qualitätsprognose mittels zumindest eines der folgenden berechnet wird:

- Mittelwert der Qualitätsdaten der Zyklen der zumindest zwei nächsten Nachbarn,
- Median der Qualitätsdaten der Zyklen der zumindest zwei nächsten Nachbarn,
- multilineares Regressionsmodell

7. Verfahren nach Anspruch 5 oder 6, **dadurch gekennzeichnet, dass**, falls die Qualitätsprognose außerhalb eines vorgegebenen Toleranzbereichs liegt, für zumindest einen nachfolgenden Zyklus - vorzugsweise mehrere nachfolgende Zyklen - zumindest eines der folgenden durchgeführt wird:

- Aktivieren einer Vorrichtung (4) zum Erheben von Qualitätsdaten und/oder
- Auffordern eines Bedieners zum Erheben der Qualitätsdaten und/oder
- Ansteuern einer Ausschussweiche (5) und/oder
- Ablegen zumindest eines im zumindest einen weiteren Zyklus hergestellten Formteils (2) in einer Prüfablage (9) und/oder

Markierung zumindest eines im zumindest einen weiteren Zyklus hergestellten Formteils (2).

8. Verfahren nach einem der vorhergehenden Ansprüche, **dadurch gekennzeichnet, dass**, falls das Vorhersagbarkeitskriterium nicht erfüllt ist, für zumindest einen nachfolgenden Zyklus - vorzugsweise mehrere nachfolgende Zyklen - zumindest eines der folgenden durchgeführt wird:

- Aktivieren einer Vorrichtung (4) zum Erheben von Qualitätsdaten und/oder
- Auffordern eines Bedieners zum Erheben der Qualitätsdaten und/oder
- Ansteuern einer Ausschussweiche (5) und/oder
- Ablegen zumindest eines im zumindest einen weiteren Zyklus hergestellten Formteils (2) in einer Prüfablage (9) und/oder

Markierung zumindest eines im zumindest einen weiteren Zyklus hergestellten Formteils (2).

9. Verfahren nach einem der vorhergehenden Ansprüche, **dadurch gekennzeichnet, dass**

- im Rahmen einer Anomalie-Prüfung überprüft wird, ob es sich bei den aktuellen Zyklusdaten um einen Ausreißer handelt, und,
- falls dies der Fall ist, eine zweite Meldung ausgegeben wird.

10. Verfahren nach einem der vorhergehenden Ansprüche, **dadurch gekennzeichnet, dass** im Rahmen einer Anomalie-Prüfung überprüft wird, ob es sich bei den aktuellen Zyklusdaten um einen Ausreißer handelt, und, falls dies der Fall ist, für zumindest einen nachfolgenden Zyklus

- vorzugsweise mehrere nachfolgende Zyklen - zumindest eines der folgenden durchgeführt wird:

- Aktivieren einer Vorrichtung (4) zum Erheben von Qualitätsdaten und/oder
- Auffordern eines Bedieners zum Erheben der Qualitätsdaten und/oder
- Ansteuern einer Ausschussweiche (5) und/oder
- Ablegen zumindest eines im zumindest einen weiteren Zyklus hergestellten Formteils (2) in einer Prüfablage (9) und/oder
- Markierung zumindest eines im zumindest einen weiteren Zyklus hergestellten Formteils (2).

11. Verfahren nach Anspruch 9 oder 10, **dadurch gekennzeichnet, dass** die Anomalie-Prüfung mittels winkelbasierter Ausreißer-Detektion durchgeführt wird.

12. Verfahren nach einem der vorhergehenden Ansprüche, **dadurch gekennzeichnet, dass** die Qualitätsdaten der vergangenen Zyklen durch Messung an den Formteilen (2) und/oder durch menschliche Begutachtung der Formteile (2) erhoben werden.

13. Verfahren nach einem der vorhergehenden Ansprüche, **dadurch gekennzeichnet, dass** die Zyklusdaten und/oder die aktuellen Zyklusdaten Einstelldaten der Formgebungsmaschine (1) beinhalten, die den vergangenen Zyklen beziehungsweise dem zumindest einen weiteren Zyklus zugeordnet werden.

14. Verfahren nach Anspruch 13, wobei die Zyklusdaten und die aktuellen Zyklusdaten Einstelldaten der Formgebungsmaschine (1) beinhalten, **dadurch gekennzeichnet, dass**

- im Rahmen einer Einstellungs-Prüfung überprüft wird, ob ein Einstellungs-Abstand der zum zumindest einen weiteren Zyklus zugeordneten Einstelldaten von den Einstelldaten der Zyklusdaten geringer als ein vorherbestimmter Einstellungs-Maximalabstand ist, und
- falls dies nicht der Fall ist, eine dritte Meldung ausgegeben wird.

15. Verfahren nach einem der vorhergehenden Ansprüche, **dadurch gekennzeichnet, dass** die Zyklusdaten und/oder die Qualitätsdaten transformiert und dimensionsreduziert werden und dass die transformierten und dimensionsreduzierten Zyklusdaten und/oder die transformierten und dimensionsreduzierten Qualitätsdaten für die Bestimmung der zumindest zwei nächsten Nachbarn und/oder die Überprüfung des Vorhersagbarkeitskriteriums und/oder die Anomalie-Prüfung verwendet werden.

16. Verfahren nach Anspruch 15, **dadurch gekennzeichnet, dass** die Zyklusdaten und/oder die Qualitätsdaten mittels eines multilinearen Regressionsmodells, insbesondere einer Partial-Least-Squares-Regression und/oder einer Hauptkomponentenregression, transformiert und dimensionsreduziert werden.

17. Verfahren nach einem der vorhergehenden Ansprüche, **dadurch gekennzeichnet, dass** die Zyklusdaten und/oder die aktuellen Zyklusdaten Prozessdaten beinhalten, die während der vergangenen Zyklen und/oder während des zumindest einen weiteren Zyklus durch Prozessmessung und/oder Auslesen aus einer Maschinensteuerung (3) erhoben werden, wobei die Prozessmessung und/oder das Auslesen der Maschinensteuerung (3) an der Formgebungsmaschine (1) selbst oder einer Formgebungsanlage, welche die Formgebungsmaschine (1) beinhaltet, durchgeführt wird.

18. Verfahren nach einem der vorhergehenden Ansprüche, **dadurch gekennzeichnet, dass**

    - die aktuellen Zyklusdaten den Zyklusdaten hinzugefügt werden und/oder
    - falls aktuelle Qualitätsdaten für den zumindest einen weiteren Zyklus vorliegen, die aktuellen Qualitätsdaten den Qualitätsdaten hinzugefügt werden.

19. Computerprogrammprodukt zum Überwachen eines in Zyklen durchgeführten Formgebungsprozesses, insbesondere zum Durchführen eines Verfahrens nach einem der vorhergehenden Ansprüche, wobei das Computerprogrammprodukt Instruktionen zum Zugreifen auf eine Datensammlung beinhaltet und die Datensammlung zumindest die folgenden Daten beinhaltet:

    - für vergangene Zyklen jeweils Zyklusdaten des an einer Formgebungsmaschine (1) durchgeführten Formgebungsprozesses,
    - für zumindest einen Teil der vergangenen Zyklen Qualitätsdaten von mit der Formgebungsmaschine (1) hergestellten Formteilen (2) und
    - aktuelle Zyklusdaten aus zumindest einem weiteren mit der Formgebungsmaschine (1) durchgeführten Zyklus des Formgebungsprozesses,

    **dadurch gekennzeichnet, dass** das Computerprogrammprodukt weitere Instruktionen zum Durchführen der folgenden Schritte beinhaltet:

    - Bestimmen zumindest zweier nächster Nachbarn in Form der Zyklusdaten von zumindest zwei der vergangenen Zyklen, sodass die Zyklusdaten der zumindest zwei nächsten Nachbarn näher an den aktuellen Zyklusdaten als diejenigen Zyklusdaten liegen, die nicht zu den zumindest zwei nächsten Nachbarn gehören, wobei für die Bestimmung der zumindest zwei nächsten Nachbarn nur jene vergangenen Zyklen herangezogen werden, wofür Qualitätsdaten in der Datensammlung enthalten sind,
    - Überprüfen eines Vorhersagbarkeitskriteriums, wobei überprüft wird, ob eine Qualitätsstreuung der Qualitätsdaten der Zyklen der zumindest zwei nächsten Nachbarn kleiner als eine Maximalstreuung und/oder größer als eine Minimalstreuung ist, und
    - falls das Vorhersagbarkeitskriterium nicht erfüllt ist, Ausgeben einer ersten Meldung, dass eine Qualität und/oder ein Qualitätsdatum des mit dem zumindest einen weiteren Zyklus hergestellten Formteils (2) nicht zuverlässig vorhersagbar ist.

20. Computerprogrammprodukt nach Anspruch 19, **dadurch gekennzeichnet, dass** das Computerprogrammprodukt weitere Instruktionen zum Durchführen der folgenden Schritte beinhaltet:

    - Durchführen einer Anomalie-Prüfung, wobei überprüft wird, ob es sich bei den aktuellen Zyklusdaten um einen Ausreißer handelt, und,
    - falls dies der Fall ist, für zumindest einen nachfolgenden Zyklus - vorzugsweise mehrere nachfolgende Zyklen - Veranlassen zumindest eines der folgenden:

        - Aktivieren einer Vorrichtung (4) zum Erheben von Qualitätsdaten und/oder
        - Auffordern eines Bedieners zum Erheben der Qualitätsdaten und/oder
        - Ansteuern einer Ausschussweiche (5) und/oder
        - Ablegen zumindest eines im zumindest einen weiteren Zyklus hergestellten Formteils (2) in einer Prüfablage (9) und/oder
        - Markierung zumindest eines im zumindest einen weiteren Zyklus hergestellten Formteils (2).

21. Computerlesbares Speichermedium, in welchem ein Computerprogrammprodukt nach Anspruch 19 oder 20 gespeichert ist.

22. Formgebungsmaschine, insbesondere geeignet zur Durchführung eines Verfahrens nach einem der Ansprüche 1 bis 18, welche Formgebungsmaschine (1) zum Durchführen eines in Zyklen durchzuführenden Formgebungsprozesses eingerichtet ist und zumindest einen Speicher (6) und zumindest eine Prozessoreinheit (7) beinhaltet, wobei im zumindest einen Speicher (6) ein Computerprogrammprodukt gemäß Anspruch 19 oder 20 gespeichert ist und die zumindest eine Prozessoreinheit (7) zum Ausführen des Computerprogrammprodukts gemäß Anspruch 19 oder 20 eingerichtet ist.

**Claims**

1. Method for monitoring a molding process carried out in cycles, wherein a data collection is provided which contains at least the following data:

    - in each case cycle data of the molding process carried out on a molding machine (1) for past cycles and
    - quality data from molded parts (2) produced using the molding machine (1) for at least some of the past cycles,

    and wherein, with the molding machine (1), at least one further cycle of the molding process is carried out as well as current cycle data of the at least one further cycle are gathered, **characterized in that** the following further steps are carried out:

    - determining at least two nearest neighbors in the form of the cycle data from at least two of the past cycles, such that the cycle data of the at least two nearest neighbors lie nearer to the current cycle data than the cycle data which do not pertain to the at least two nearest neighbors, wherein only those past cycles for which quality data are contained in the data collection are used for the determination of the at least two nearest neighbors,
    - checking a predictability criterion, wherein it is checked whether a quality variation of the quality data of the cycles of the at least two nearest neighbors is smaller than a maximum variation and/or larger than a minimum variation and,
    - if the predictability criterion is not met, issuing a first notification that a quality and/or a quality datum of the molded part (2) produced with the at least one further cycle is not reliably predictable.

2. Method according to claim 1, **characterized in that** the quality variation is calculated as a - preferably normalized - difference between a maximum quality value of the at least two nearest neighbors and a minimum quality value of the at least two nearest neighbors.

3. Method according to one of the preceding claims, **characterized in that** the quality variation of the quality data is used in the checking of the predictability criterion in a form wherein the quality variation is correlated with a cycle data variation of the cycle data of the at least two nearest neighbors.

4. Method according to claim 3, **characterized in that** the cycle data variation is calculated as a - preferably normalized - maximum distance between the at least two nearest neighbors.

5. Method according to one of the preceding claims, **characterized in that**, if the prediction criterion is met, a quality prognosis based on the cycle data and the quality data is calculated and issued.

6. Method according to claim 5, **characterized in that** the quality prognosis is calculated by means of at least one of the following:

    - arithmetic mean of the quality data of the cycles of the at least two nearest neighbors,
    - median of the quality data of the cycles of the at least two nearest neighbors,
    - multilinear regression model.

7. Method according to claim 5 or 6, **characterized in that**, if the quality prognosis lies outside a predefined tolerance range, at least one of the following steps is carried out for at least one subsequent cycle - preferably several subsequent cycles:

    - activating a device (4) for gathering quality data and/or
    - prompting an operator to gather the quality data and/or
    - actuating a reject gate (5) and/or
    - depositing at least one molded part (2) produced in the at least one further cycle in an inspection tray (9) and/or

    marking at least one molded part (2) produced in the at least one further cycle.

8. Method according to one of the preceding claims, **characterized in that**, if the predictability criterion is not met, at least one of the following steps is carried out for at least one subsequent cycle - preferably several subsequent cycles:

    - activating a device (4) for gathering quality data and/or

- prompting an operator to gather the quality data and/or
- actuating a reject gate (5) and/or
- depositing at least one molded part (2) produced in the at least one further cycle in an inspection tray (9) and/or

marking at least one molded part (2) produced in the at least one further cycle.

9. Method according to one of the preceding claims, **characterized in that**

- in the context of an anomaly check, it is checked whether the current cycle data constitute an outlier and,
- if this is the case, a second notification is issued.

10. Method according to one of the preceding claims, **characterized in that**, in the context of an anomaly check, it is checked whether the current cycle data constitute an outlier and, if this is the case, at least one of the following steps is carried out for at least one subsequent cycle - preferably several subsequent cycles:

- activating a device (4) for gathering quality data and/or
- prompting an operator to gather the quality data and/or
- actuating a reject gate (5) and/or
- depositing at least one molded part (2) produced in the at least one further cycle in an inspection tray (9) and/or
- marking at least one molded part (2) produced in the at least one further cycle.

11. Method according to claim 9 or 10, **characterized in that** the anomaly check is carried out by means of angle-based outlier detection.

12. Method according to one of the preceding claims, **characterized in that** the quality data of the past cycles are gathered by measurement on the molded parts (2) and/or by human assessment of the molded parts (2).

13. Method according to one of the preceding claims, **characterized in that** the cycle data and/or the current cycle data contain setting data for the molding machine (1), which are assigned to the past cycles or to the at least one further cycle, respectively.

14. Method according to claim 13, wherein the cycle data and the current cycle data contain setting data of the molding machine (1), **characterized in that**,

- in the context of a setting check, it is checked whether a setting distance between the setting data assigned to the at least one further cycle and the setting data of the cycle data is smaller than a predetermined maximum setting distance and,
- if this is not the case, a third notification is issued.

15. Method according to one of the preceding claims, **characterized in that** the cycle data and/or the quality data are transformed and dimension-reduced and **in that** the transformed and dimension-reduced cycle data and/or the transformed and dimension-reduced quality data are used for the determination of the at least two nearest neighbors and/or for the checking of the predictability criterion and/or the anomaly check.

16. Method according to claim 15, **characterized in that** the cycle data and/or the quality data are transformed and dimension-reduced by means of a multilinear regression model, in particular a partial least squares regression and/or a principal component regression.

17. Method according to one of the preceding claims, **characterized in that** the cycle data and/or the current cycle data contain process data, which are gathered during the past cycles and/or during the at least one further cycle by process measurement and/or reading out of a machine control system (3), wherein the process measurement and/or the reading out of the machine control system (3) is carried out on the molding machine (1) itself or a molding system which contains the molding machine (1).

18. Method according to one of the preceding claims, **characterized in that**

- the current cycle data are added to the cycle data and/or,
- if current quality data are present for the at least one further cycle, the current quality data are added to the quality data.

19. Computer program product for monitoring a molding process carried out in cycles, in particular for carrying out a method according to one of the preceding claims, wherein the computer program product contains instructions for accessing a data collection and the data collection contains at least the following data:

- in each case cycle data of the molding process carried out on a molding machine (1) for past cycles,
- quality data from molded parts (2) produced using the molding machine (1) for at least some of the past cycles, and
- current cycle data from at least one further cycle of the molding process carried out using the molding machine (1),

**characterized in that** the computer program product contains further instructions for carrying out the following steps:

- determining at least two nearest neighbors in the form of the cycle data from at least two of the past cycles, such that the cycle data of the at least two nearest neighbors lie nearer to the current cycle data than the cycle data which do not pertain to the at least two nearest neighbors, wherein only those past cycles for which quality data are contained in the data collection are used for the determination of the at least two nearest neighbors,
- checking a predictability criterion, wherein it is checked whether a quality variation of the quality data of the cycles of the at least two nearest neighbors is smaller than a maximum variation and/or larger than a minimum variation and,
- if the predictability criterion is not met, issuing a first notification that a quality and/or a quality datum of the molded part (2) produced with the at least one further cycle is not reliably predictable.

20. Computer program product according to claim 19, **characterized in that** the computer program product contains further instructions for carrying out the following steps:

- carrying out an anomaly check, wherein it is checked whether the current cycle data constitute an outlier and,
- if this is the case, initiating at least one of the following steps for at least one subsequent cycle
- preferably several subsequent cycles:

- activating a device (4) for gathering quality data and/or
- prompting an operator to gather the quality data and/or
- actuating a reject gate (5) and/or
- depositing at least one molded part (2) produced in the at least one further cycle in an inspection tray (9) and/or
- marking at least one molded part (2) produced in the at least one further cycle.

21. Computer-readable storage medium in which a computer program product according to claim 19 and/or 20 is stored.

22. Molding machine, in particular suitable for carrying out a method according to one of claims 1 to 18, which molding machine (1) is set up for carrying out a molding process to be carried out in cycles and contains at least one memory (6) and at least one processor unit (7), wherein a computer program product according to claim 19 and/or 20 is stored in the at least one memory (6) and the at least one processor unit (7) is set up for executing the computer program product according to claim 19 and/or 20.

**Revendications**

1. Procédé de surveillance d'un processus de façonnage réalisé en cycles, dans lequel un ensemble de données collectées est fourni, lequel contient au moins les données suivantes :

- pour des cycles passés, respectivement des données de cycle du processus de façonnage réalisé sur une machine de façonnage (1), et
- pour au moins une partie des cycles passés, des données de qualité de pièces moulées (2) fabriquées avec la machine de façonnage (1),

et dans lequel au moins un autre cycle du processus de façonnage est réalisé avec la machine de façonnage (1) et des données de cycles actuelles de l'au moins un autre cycle sont recueillies, **caractérisé en ce que** les autres étapes suivantes sont réalisées :

- la définition d'au moins deux voisins les plus proches sous la forme des données de cycle d'au moins deux des cycles passés si bien que les données de cycle des au moins deux voisins les plus proches sont plus proches des données de cycle actuelles que ces données de cycle qui précisément n'appartiennent pas aux au moins deux voisins les plus proches, dans lequel ne sont pris en compte, pour la définition des au moins deux voisins les plus proches, que ces cycles passés pour lesquels précisément des données de qualité sont contenues dans l'ensemble de données collectées,
- la vérification d'un critère de prévisibilité, dans lequel il est vérifié si une répartition de qualité des données de qualité des cycles des au moins deux voisins les plus proches est inférieure à une répartition maximale et/ou est supérieure à une répartition minimale, et
- si le critère de prévisibilité n'est pas rempli, l'envoi d'un premier message indiquant qu'une qualité et/ou une date de qualité de la pièce moulée (2) fabriquée avec l'au moins un autre cycle ne sont pas prévisibles avec fiabilité.

**2.** Procédé selon la revendication 1, **caractérisé en ce que** la répartition de qualité est calculée en tant que différence - de préférence normée - d'une valeur maximale de qualité des au moins deux voisins les plus proches et d'une valeur minimale de qualité des au moins deux voisins les plus proches.

**3.** Procédé selon l'une quelconque des revendications précédentes, **caractérisé en ce que** la répartition de qualité des données de qualité est utilisée lors de la vérification du critère de prévisibilité sous une forme, dans lequel la répartition de qualité est mise en relation avec une répartition de données de cycle des données de cycle des au moins deux voisins les plus proches.

**4.** Procédé selon la revendication 3, **caractérisé en ce que** la répartition de données de cycle est calculée en tant que distance maximale - de préférence normée - entre les au moins deux voisins les plus proches.

**5.** Procédé selon l'une quelconque des revendications précédentes, **caractérisé en ce que**, si le critère de prévisibilité est rempli, une prévision de qualité se basant sur les données de cycle et les données de qualité est calculée et envoyée.

**6.** Procédé selon la revendication 5, **caractérisé en ce que** la prévision de qualité est calculée au moyen d'au moins un des éléments suivants :

- une valeur moyenne des données de qualité des cycles des au moins deux voisins les plus proches,
- une médiane des données de qualité des cycles des au moins deux voisins les plus proches,
- un modèle de régression multilinéaire.

**7.** Procédé selon la revendication 5 ou 6, **caractérisé en ce que**, si la prévision de qualité se situe en dehors d'une plage de tolérance prédéfinie, pour au moins un cycle qui suit, de préférence plusieurs cycles qui suivent, au moins une des opérations suivantes est effectuée :

- l'activation d'un dispositif (4) destiné à recueillir des données de qualité et/ou
- la demande à un utilisateur de recueillir les données de qualité et/ou
- le pilotage d'un volet de rejet (5) et/ou
- le dépôt d'au moins une pièce moulée (2) fabriquée dans l'au moins un autre cycle sur un support de test (9), et/ou

le marquage d'au moins une pièce moulée (2) fabriquée dans l'au moins un autre cycle.

**8.** Procédé selon l'une quelconque des revendications précédentes, **caractérisé en ce que** si le critère de prévisibilité n'est pas rempli, pour au moins un cycle qui suit - de préférence plusieurs cycles qui suivent -, au moins une des opérations suivantes est réalisée :

- l'activation d'un dispositif (4) destiné à recueillir des données de qualité et/ou
- la demande à un utilisateur de recueillir les données de qualité, et/ou
- le pilotage d'un volet de rejet (5) et/ou
- le dépôt d'au moins une pièce moulée (2) fabriquée dans l'au moins un autre cycle sur un support de test (9), et/ou

le marquage d'au moins une pièce moulée (2) fabriquée dans l'au moins un autre cycle.

**9.** Procédé selon l'une quelconque des revendications précédentes, **caractérisé en ce que**

- il est vérifié dans le cadre d'un contrôle d'anomalie si les données de cycle actuelles sont une valeur aberrante, et,
- si cela est le cas, un deuxième message est envoyé.

**10.** Procédé selon l'une quelconque des revendications précédentes, **caractérisé en ce que** dans le cadre d'un contrôle d'anomalie, il est vérifié si les données de cycle actuelles sont une valeur aberrante, et, si tel est le cas, pour au moins un cycle qui suit - de préférence plusieurs cycles qui suivent - au moins une des opérations suivantes est effectuée :

- l'activation d'un dispositif (4) destiné à recueillir des données de qualité et/ou
- la demande à un utilisateur de recueillir les données de qualité, et/ou
- le pilotage d'un volet de rejet (5) et/ou
- le dépôt d'au moins une pièce moulée (2) fabriquée dans l'au moins un autre cycle sur un support de test (9), et/ou
- le marquage d'au moins une pièce moulée (2) fabriquée dans l'au moins un autre cycle.

**11.** Procédé selon la revendication 9 ou 10, **caractérisé en ce que** le contrôle d'anomalie est réalisé au moyen d'une détection de valeur aberrante basée sur un angle.

**12.** Procédé selon l'une quelconque des revendications précédentes, **caractérisé en ce que** les données de qualité des cycles passés sont recueillies par la mesure sur les pièces moulées (2) et/ou par examen par une personne des pièces moulées (2).

**13.** Procédé selon l'une quelconque des revendications précédentes, **caractérisé en ce que** les données de cycle et/ou les données de cycle actuelles renferment des données de réglage de la machine de façonnage (1), qui sont associées aux cycles passés ou à l'au moins un autre cycle.

**14.** Procédé selon la revendication 13, dans lequel les données de cycle et les données de cycle actuelles renferment des données de réglage de la machine de façonnage (1), **caractérisé en ce que**

- il est vérifié dans le cadre d'un contrôle de réglage si une distance de réglage des données de réglage associées à l'au moins un autre cycle par rapport aux données de réglage des données de cycle est inférieure à une distance maximale de réglage définie au préalable, et
- si cela n'est pas le cas, un troisième message est envoyé.

**15.** Procédé selon l'une quelconque des revendications précédentes, **caractérisé en ce que** les données de cycle et/ou les données de qualité sont transformées et réduites en dimension, et que les données de cycle transformées et réduites en dimension et/ou les données de qualité transformées et réduites en dimension sont utilisées pour la définition des au moins deux voisins les plus proches et/ou pour la vérification du critère de prévisibilité et/ou pour le contrôle d'anomalie.

**16.** Procédé selon la revendication 15, **caractérisé en ce que** les données de cycle et/ou les données de qualité sont transformées et sont réduites en dimension au moyen d'un modèle de régression multilinéaire, en particulier d'une régression partielle par les moindres carrés et/ou une régression de composant principal.

**17.** Procédé selon l'une quelconque des revendications précédentes, **caractérisé en ce que** les données de cycle et/ou les données de cycle actuelles renferment des données de processus, qui sont recueillies pendant les cycles passés et/ou pendant l'au moins un autre cycle par mesure de processus et/ou par lecture depuis une commande de machine (3), dans lequel la mesure de processus et/ou la lecture de la commande de machine (3) sont effectuées sur la machine de façonnage (1) elle-même ou sur une installation de façonnage, laquelle renferme la machine de façonnage (1).

**18.** Procédé selon l'une quelconque des revendications précédentes, **caractérisé en ce que**

- les données de cycle actuelles sont ajoutées aux données de cycle, et/ou

- si des données de qualité actuelles sont présentes pour l'au moins un autre cycle, les données de qualité actuelles sont ajoutées aux données de qualité.

**19.** Produit de programme d'ordinateur destiné à surveiller un processus de façonnage réalisé dans des cycles, en particulier destiné à réaliser un procédé selon l'une quelconque des revendications précédentes, dans lequel le produit de programme d'ordinateur renferme des instructions destinées à accéder à un ensemble de données collectées et l'ensemble de données collectées renferme au moins les données suivantes :

- pour des cycles passés, respectivement des données de cycle du processus de façonnage réalisé sur une machine de façonnage (1), et
- pour au moins une partie des cycles passés, des données de qualité de pièces moulées (2) fabriquées avec la machine de façonnage (1), et
- des données de cycle actuelles issues d'au moins un autre cycle du processus de façonnage réalisé avec la machine de façonnage (1),

**caractérisé en ce que** le produit de programme d'ordinateur renferme d'autres instructions pour réaliser les étapes suivantes :

- la définition d'au moins deux voisins les plus proches sous la forme des données de cycle d'au moins deux des cycles passés si bien que les données de cycle des au moins deux voisins les plus proches sont plus proches des données de cycle actuelles que ces données de cycle qui précisément n'appartiennent pas aux au moins deux voisins les plus proches, dans lequel ne sont pris en compte, pour la définition des au moins deux voisins les plus proches, que ces cycles passés pour lesquels précisément des données de qualité sont contenues dans l'ensemble de données collectées,
- la vérification d'un critère de prévisibilité, dans lequel il est vérifié si une répartition de qualité des données de qualité des cycles des au moins deux voisins les plus proches est inférieure à une répartition maximale et/ou est supérieure à une répartition minimale, et
- si le critère de prévisibilité n'est pas rempli, l'envoi d'un premier message indiquant qu'une qualité et/ou une date de qualité de la pièce moulée (2) fabriquée avec l'au moins un autre cycle ne sont pas prévisibles avec fiabilité.

**20.** Produit de programme d'ordinateur selon la revendication 19, **caractérisé en ce que** le produit de programme d'ordinateur renferme d'autres instructions pour réaliser les étapes suivantes :

- la réalisation d'un contrôle d'anomalie, dans lequel il est si les données de cycle actuelles sont une valeur aberrante, et,
- si tel est le cas, pour au moins un cycle qui suit
- de préférence plusieurs cycles qui suivent - le déclenchement d'au moins une des opérations suivantes :

    - l'activation d'un dispositif (4) destiné à recueillir des données de qualité et/ou
    - la demande à un utilisateur de recueillir les données de qualité et/ou
    - le pilotage d'un volet de rejet (5) et/ou
    - le dépôt d'au moins une pièce moulée (2) fabriquée dans l'au moins un autre cycle sur un support de test (9), et/ou
    - le marquage d'au moins une pièce moulée (2) fabriquée dans l'au moins un autre cycle.

21. Support de stockage lisible par ordinateur, dans lequel un produit de programme d'ordinateur selon la revendication 19 ou 20 est stocké.

22. Machine de façonnage, en particulier adaptée pour réaliser un procédé selon l'une quelconque des revendications 1 à 18, laquelle machine de façonnage (1) est mise au point pour réaliser un processus de façonnage à réaliser dans des cycles et qui renferme au moins un système de stockage (6) et au moins une unité de processeur (7), dans laquelle un produit de programme d'ordinateur selon la revendication 19 ou 20 est stocké dans l'au moins un système de stockage (6) et l'au moins une unité de processeur (7) est mise au point pour exécuter le produit de programme d'ordinateur selon la revendication 19 ou 20.

## Fig. 1

**Zyklus (bzw. Teilzyklus) abgeschlossen:**
- Aufgezeichnete Einstellparameter
  - IMM und Peripheriegeräte
- Messdaten der Prozessgrößen
  - Kurvendaten und/oder Prozessparameter
  - IMM und Peripheriegeräte

**Inputanalyse – Unbekannte Einstellparameter:**
- Liegen die Einstellparameter innerhalb der Menge (inkl. zulässiger Toleranz) aller bisherigen Einstellparameter?

N → **Neue Prozesseinstellung erkannt**

**Inputanalyse - Anomalieerkennung:**
- Liegen die Inputs innerhalb der Menge (inkl. zulässiger Toleranz) aller bisherigen Inputs?

N → **Detailanalyse der Anomalie**
- Anomalie oder noch Modelltraining
- In welcher Prozessphase tritt die Anomalie auf?
- …

→ **Ergebnisdarstellung über Prozessanomalie**
- Visualisierung an IMM/PC/KP
- Benachrichtigung
- Opt. Aufforderung zur Teileprüfung

**Auswertung des Vorhersagbarkeitskriteriums**
- $V_V \in [1-\varepsilon, 1+\varepsilon]$

N → **Prognose nicht zuverlässig möglich**

**Qualitätsprognose**
- Anwendung von Lazy-Learning
- Inkl. Ermittlung der Prognosetoleranz

→ **Ergebnisdarstellung**
- Visualisierung an IMM/PC/KP
- Benachrichtigung (z.B. mail)
- i.O. / n.i.O.
- Qualitätskennzahl + Prognosetoleranz
- Graphisch

**Erweiterung der Inputdatenbasis**
- Hinzunahme der Inputdaten zur Menge der bekannten Inputs
  - Vergessen alter Daten oder
    - nur bei Abweichung von bekannten Inputs
  - Opt. Hinzunahme der Inputs Anomalie nach Bestätigung des Bedieners

**Opt.: Ausschussweiche ansteuern**
- Z.B. wenn Q-Kennzahl + Prognosetoleranz außerhalb der Bauteiltoleranz

Fig.2a

Fig. 2b

Fig. 3

Fig. 4

# Fig. 5

**Definition/Auswahl möglicher Bauteilmängel**
- Geometrische Abweichungen
- Short shots
- Schlieren
- ...

**Definition der relevanten Prozessgrößen**
- Allg. Vorauswahl
- Prozess- /materialabhängige Zusatzparameter
- Durch Bediener definierte zusätzliche Größen (z.B. Peripheriegeräte)

**Generierung der initialen Trainingsbasis**
- DOE / im Laufenden Betrieb
- Input/Target Paare
- Optional zusätzliche Inputs

**Modelltraining**
- Bestimmung der PLSR Parameter
- Gridsearch für optimale Anzahl an nearest neighbors (reduzierter Aufwand für suoptimale Parameter)

**Modellbetrieb**
- Prozessanalyse und Qualitätsprogno
- Modellanalyse und Erweiterung der Datenbasis

**Modellupdate**
- Update der PLSR Parameter
- Optimale Anzahl an nearest neighbors
- Analyse und Reduktion der Datenbasis
  - Optional. volle Datenbasis in der Cloud (reduzierte Auswahl am ED)
- Optionale Auswertungen

Fig. 6

EP 4 108 411 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112011103778 T5
- US 20120123583 A1
- DE 102017104884 A1
- DE 102018102299 A1
- US 20060224540 A1
- US 20210008774 A1
- DE 19514535 A1